# EUROPÄISCHE PATENTSCHRIFT

(11) **EP 2 212 180 B1**
(45) Veröffentlichungstag und Bekanntmachung des Hinweises auf die Patenterteilung: **03.12.2014**
(21) Anmeldenummer: 08842978.2
(22) Anmeldetag: 16.10.2008
(51) Int. Cl.: B61K 9/08, G05B 23/02

(54) **BESTIMMUNG DER RESTLEBENSDAUER EINER FAHRZEUGKOMPONENTE**
DETERMINING THE REMAINING SERVICE LIFE OF A VEHICLE COMPONENT
DÉTERMINATION DE LA DURÉE DE VIE RÉSIDUELLE D'UN ÉLÉMENT DE VÉHICULE

(30) Priorität: 24.10.2007 DE 102007051126
(43) Veröffentlichungstag der Anmeldung: 04.08.2010
(73) Patentinhaber: Bombardier Transportation GmbH, 10785 Berlin (DE)
(72) Erfinder: BIEKER, Guido, 57399 Kirchhundem (DE); HECKMANN, Ralf, 57072 Siegen (DE); BAERT, Mike, B-8200 Sint-Andries (BE); BREEMEERSCH, Marc, B-8930 Menen (BE)
(74) Vertreter: Cohausz & Florack
(86) Internationale Anmeldenummer: PCT/EP2008/063951
(87) Internationale Veröffentlichungsnummer: WO 2009/053303

(56) Entgegenhaltungen:
- WO-A-2004/022406
- DE-A1- 10 144 076
- DE-A1- 10 257 793

## Beschreibung

Die vorliegende Erfindung betrifft ein Verfahren zum Bestimmen der Restlebensdauer einer Fahrzeugkomponente eines auf wenigstens einem vorgegebenen Streckenabschnitt eines Streckennetzes betriebenen Fahrzeugs, insbesondere eines Schienenfahrzeugs, bei dem die Restlebensdauer einer im Betrieb durch die Wechselwirkung zwischen dem Fahrzeug und dem Streckenabschnitt mechanisch beanspruchten Fahrzeugkomponente des Fahrzeugs nach einem Nutzungsintervall des wenigstens einen Streckenabschnitts ermittelt wird. Die Restlebensdauer der Fahrzeugkomponente wird aus einem zu Beginn des Nutzungsintervalls für die Fahrzeugkomponente vorgegebenen bisherigen Lebensdauerverlust und aus einem dem Nutzungsintervall zugeordneten aktuellen Lebensdauerverlust der Fahrzeugkomponente ermittelt. Die Erfindung betrifft weiterhin ein entsprechendes System zur Bestimmung der Restlebensdauer einer Fahrzeugkomponente. Schließlich betrifft sie ein Messfahrzeug, welches entsprechende Messwerte für die Bestimmung der Restlebensdauer einer solchen Fahrzeugkomponente liefert.

Die Fahrzeugkomponenten von Fahrzeugen, insbesondere solche Fahrzeugkomponenten, die einer dynamischen Beanspruchung unterliegen, werden hinsichtlich ihrer Dauerfestigkeit typischerweise auf eine bestimmte vorgebbare Lebensdauer ausgelegt. Typischerweise wird für diese Auslegung eine theoretische zu erwartende Beanspruchung der Fahrzeugkomponente in Verbindung mit entsprechenden Sicherheitsfaktoren angesetzt. Die theoretische zu erwartende Beanspruchung resultiert dabei typischerweise aus einem aufgrund von Erfahrungswerten zusammengestellten Konglomerat aus unterschiedlichen Lastfällen, welche im Betrieb des Fahrzeugs auftreten können.

Da bei der Entwicklung des Fahrzeugs typischerweise keine detaillierten Aussagen über die spätere tatsächliche Belastung des Fahrzeugs und damit die tatsächlichen Beanspruchungen der Fahrzeugkomponenten getroffen werden können, müssen in der Regel (wenn auch selten auftretende, aber dennoch theoretisch mögliche) extreme Lastfälle berücksichtigt werden, um ein frühzeitiges Versagen der Fahrzeugkomponente beim tatsächlichen Auftreten solcher extremer Lastfälle zu vermeiden. Insbesondere bei sicherheitsrelevanten Fahrzeugkomponenten wird zudem in der Regel mit entsprechend hohen Sicherheitsfaktoren gearbeitet. Die entsprechenden Regeln für die Auslegung der Fahrzeugkomponenten sind häufig durch gesetzliche Vorschriften bzw. (insbesondere im Bereich des öffentlichen Personen- und Güterverkehrs) durch Vorschriften des Betreibers des Fahrzeugs vorgegeben.

So werden beispielsweise Schienenfahrzeuge entsprechend internationalen Vorschriften und Lastenheftanforderungen hinsichtlich ihrer Festigkeits- und Sicherheitsanforderungen dimensioniert. Bezogen auf die Festigkeit sind das Lasten und Lastwechsel die das Fahrzeug über die Lebensdauer ohne Schaden ertragen soll. Für die fahrtechnische Sicherheit werden die Nachweise ausgehend von einer definierten Gleislage und den Fahrzeugparametern ermittelt. Bei allen Betrachtungen ist die Interaktion zwischen Gleis und Fahrzeug entscheidend dafür, ob die Nachweise ihre Gültigkeit behalten. Wenn sich infolge Abweichung der Gleislage, durch zunehmende schlechtere Unterhaltung, die Lastwechsel und/oder die Lasthöhe verändern, dann führt das dazu, dass sich vor Ablauf der geplanten Nutzungsdauer Schäden in Form von Rissen in den Bauteilen, speziell den Drehgestellen, einstellen können. Risse stellen ein Betriebsrisiko dar, sodass in der Regel eine sehr aufwändige Inspektion der Fahrzeugkomponenten (mit Risskontrolle) der Fahrzeugflotte für den Weiterbetrieb (gegebenenfalls nach Austausch beschädigter Komponenten) erforderlich ist.

Vor diesem Hintergrund ist für Fahrzeugkomponenten, die einer dynamischen Beanspruchung infolge der Wechselwirkung zwischen dem Fahrzeug und dem befahrenen Fahrweg unterliegen, üblicherweise über eine maximale theoretische Lebensdauer in Form einer bestimmten maximalen Laufleistung (beispielsweise in gefahrenen Kilometern oder dergleichen) vorgegeben. Aus der zu einem bestimmten Zeitpunkt durch das Fahrzeug verbrauchten Laufleistung (beispielsweise den bisher zurückgelegten Kilometern) wird dann in der Regel als Restlebensdauer der betreffenden Fahrzeugkomponente die Differenz aus der maximalen Laufleistung und der verbrauchten Laufleistung angesetzt.

Problematisch ist hierbei, dass ein Fahrzeug in seinem Betrieb tatsächlich einem Konglomerat aus Lastfällen unterworfen ist, das unter Umständen erheblich von dem bei der Auslegung angenommenen theoretischen Konglomerat aus Lastfällen abweicht. Mithin kann eine Fahrzeugkomponente über ihre bisherige Nutzungszeit sowohl deutlich höheren als auch deutlich niedrigeren Beanspruchungen unterworfen gewesen sein, als dies bei der Auslegung angenommen wurde.

Es können somit zum einen die Fälle eintreten, bei denen die tatsächliche Lebensdauer der Fahrzeugkomponente noch nicht erreicht ist (die Fahrzeugkomponente also durchaus gefahrlos noch weiterbenutzt werden könnte), obwohl die theoretische Lebensdauer (beispielsweise in Form einer maximalen Laufleistung) erreicht ist. Dies ist zwar unter Sicherheitsgesichtspunkten unkritisch, jedoch unter wirtschaftlichen Gesichtspunkten für den Betreiber des Fahrzeugs nachteilig.

Ist beispielsweise das Ende der theoretischen Lebensdauer erreicht, muss die betreffende Fahrzeugkomponente in der Regel ausgetauscht werden oder es muss geprüft werden, ob die theoretische Lebensdauer der Fahrzeugkomponente verlängert werden kann. Während die Bestimmung der Restlebensdauer einer Fahrzeugkomponente, die einem sichtbaren Verschleiß unterworfen ist, in der Regel vergleichsweise geringe Probleme mit sich bringt, sind Fahrzeugkomponenten ohne derartigen sichtbaren Verschleiß häufig sehr aufwändigen zerstörungsfreien Prüfverfahren zu unterwerfen.

Deutlich kritischer gestaltet sich die Situation, wenn die Fahrzeugkomponente im tatsächlichen Betrieb Beanspruchungen unterworfen ist, die deutlich höher sind als diejenigen, die bei ihrer Auslegung herangezogen worden. In diesem Fall besteht die Möglichkeit, dass die tatsächliche Lebensdauer endet, die Fahrzeugkomponente also versagt, bevor ihre theoretische Lebensdauer erreicht ist. Insbesondere bei sicherheitsrelevanten Fahrzeugkomponenten, die keinem einfach erfassbaren Verschleiß unterworfen sind, sind solche Situationen unbedingt zu vermeiden. Aus der WO 2004/022406 A1 und der DE 102 57 793 A1 sind in diesem Zusammenhang vergleichsweise aufwändige Verfahren bekannt, bei denen anhand aktuell gemessener Belastungen einer solchen Fahrzeugkomponente die jeweilige Restlebensdauer der Fahrzeugkomponente ermittelt wird.

Ein wesentlicher Einflussfaktor für die im Betrieb des Fahrzeugs tatsächlich auftretenden Belastungen und die daraus resultierenden Beanspruchungen der Fahrzeugkomponenten ist der Zustand der Fahrstrecke, auf der das Fahrzeug betrieben wird. Um diesen Zustand zu erfassen, ist es beispielsweise aus der WO 00/70148 A1 sowie der US 5,579,013 bekannt, unter anderem Beschleunigungssensoren und Wegsensoren am Fahrzeug anzuordnen, um die Wechselwirkung zwischen dem Fahrzeug und der Fahrstrecke zu erfassen und Rückschlüsse auf den Zustand der befahrenen Fahrstrecke zu ziehen. Zwar kann mit den so gewonnenen Daten bezüglich der Fahrstrecke eine bedarfsgerechte Planung hinsichtlich ihrer Nutzung bzw. Wartung vorgenommen werden. Ein Weg zur Lösung der oben genannten Probleme im Zusammenhang mit der Bestimmung der Restlebensdauer von Fahrzeugkomponenten ergibt sich hieraus jedoch nicht.

In der US 5,579,013 wird weiterhin vorgeschlagen, aus den Messsignalen der Sensoren Rückschlüsse auf den Zustand bestimmter Komponenten des Fahrzeugs, wie beispielsweise der Räder zu ziehen. Zwar ist es hiermit möglich, Schädigungen bestimmter Komponenten zu erfassen, die zu einem messbaren Einfluss auf den dynamischen Zustand des Fahrzeugs haben (mithin also einen entsprechenden Einfluss auf die Messwerte der verwendeten Sensoren haben). Schädigungen, die keinen derartigen dynamischen Einfluss nach sich ziehen, können jedoch nicht erfasst werden.

Der vorliegenden Erfindung liegt daher die Aufgabe zu Grunde, ein Verfahren, System und Messfahrzeug der eingangs genannten Art zur Verfügung zu stellen, welches die oben genannten Nachteile überwindet und insbesondere eine einfachere und gleichzeitig ausreichend präzise Bestimmung der Restlebensdauer von Fahrzeugkomponenten zu beliebigen Zeitpunkten ermöglicht.

Die vorliegende Erfindung löst diese Aufgabe ausgehend von einem Verfahren gemäß dem Oberbegriff des Anspruchs 1 durch die im kennzeichnenden Teil des Anspruchs 1 angegebenen Merkmale. Sie löst diese Aufgabe weiterhin ausgehend von einem System gemäß dem Oberbegriff des Anspruchs 7 durch die im kennzeichnenden Teil des Anspruchs 7 angegebenen Merkmale. Sie löst diese Aufgabe schließlich ausgehend von einem Messfahrzeug gemäß dem Oberbegriff des Anspruchs 13 durch die im kennzeichnenden Teil des Anspruchs 13 angegebenen Merkmale.

Der vorliegenden Erfindung liegt die technische Lehre zu Grunde, dass man eine Bestimmung der tatsächlichen Restlebensdauer von Fahrzeugkomponenten zu beliebigen Zeitpunkten ermöglicht, wenn der Lebensdauerverlust der betreffenden Fahrzeugkomponente durch die tatsächliche Nutzung des Fahrzeugs mit dem bzw. den tatsächlich genutzten Streckenabschnitten und den sich hieraus ergebenden Beanspruchungen der Fahrzeugkomponente korreliert wird. Durch die Korrelation mit dem genutzten Streckenabschnitts ist es möglich, eine genauere Aussage zu den tatsächlich im Betrieb des Fahrzeugs auftretenden Beanspruchungen der jeweiligen Komponente zu treffen und hieraus einen präziseren tatsächlichen Lebensdauerverlust durch die tatsächliche Nutzung zu ermitteln.

Gemäß einem Aspekt der Erfindung ist es hierzu vorgesehen, dass der aktuelle Lebensdauerverlust anhand einer erfassten tatsächlichen Nutzung des wenigstens einen Streckenabschnitts durch das Fahrzeug und einem auf die tatsächliche Nutzung des wenigstens einen Streckenabschnitts bezogenen relativen Lebensdauerverlust ermittelt wird, wobei der relative Lebensdauerverlust für den wenigstens einen Streckenabschnitt und zumindest den Typ des Fahrzeugs vorab ermittelt wurde.

So hat sich gezeigt, dass beispielsweise durch Messungen am Fahrzeug selbst oder an einem oder mehreren geeigneten Vergleichsfahrzeugen (vorzugsweise unter realen Betriebsbedingungen) beim Befahren der betreffenden Streckenabschnitte zuverlässige, mit dem betreffenden Streckenabschnitt korrelierte Aussagen hinsichtlich der aus der Nutzung des Streckenabschnitts resultierenden tatsächlichen Beanspruchungen der betreffenden Komponente treffen lassen. Hieraus kann für die jeweilige Fahrzeugkomponente ein sich aus der Nutzung des Streckenabschnitts ergebender tatsächlicher relativer Lebensdauerverlust ermittelt werden (beispielsweise ein Lebensdauerverlust pro Nutzung des betreffenden Streckenabschnitts).

Ebenso ist es beispielsweise möglich, den relativen Lebensdauerverlust ganz oder teilweise auf theoretische Weise zu ermitteln, beispielsweise anhand von entsprechenden Simulationsrechnungen oder dergleichen. Dies ist insbesondere dann möglich, wenn sowohl von dem Fahrzeug selbst als auch von dem betreffenden Streckenabschnitt ein entsprechend präzises Computermodell vorliegt.

Vorzugsweise erfolgt die Ermittlung des relativen Lebensdauerverlusts unter Verwendung von für die Beanspruchung der Fahrzeugkomponente repräsentativen Messungen, die an einem Messfahrzeug während wenigstens eines Durchfahrens des wenigstens einen Streckenabschnitts durchgeführt wurden, da hiermit auf relativ einfache Weise besonders zuverlässige Aussagen über die tatsächlichen Beanspruchungen der jeweiligen Fahrzeugkomponente möglich sind.

Die Ermittlung des relativen Lebensdauerverlusts muss dabei nicht unter Verwendung des Fahrzeugs selbst als Messfahrzeug vorgenommen werden. Vielmehr kann auch ein Vergleichsfahrzeug für die entsprechenden Messungen verwendet werden, sofern eine entsprechend genaue Korrelation zwischen den im Betrieb auftretenden Lasten (und den daraus resultierenden Beanspruchungen der Fahrzeugkomponenten) bei beiden Fahrzeugen bekannt ist. Vorzugsweise erfolgt die Ermittlung des relativen Lebensdauerverlusts unter Verwendung von Messungen an einem Vergleichsfahrzeug desselben Typs, da hierbei eine besonders einfache Korrelation zwischen dem im Fahrzeug und dem Vergleichsfahrzeug möglich ist.

Die Ermittlung des relativen Lebensdauerverlusts kann auf der Basis eines einzigen (gegebenenfalls mehrere Messfahrten über den jeweiligen Streckenabschnitt umfassenden) Erfassungsvorgangs des betreffenden Streckenabschnitts erfolgen. Bei vorteilhaften Varianten der Erfindung ist jedoch vorgesehen, dass der sich mit der Zeit durch Verschleiß und andere Einflüsse ändernde Zustand des jeweiligen Streckenabschnitts und der sich hieraus ergebende Einfluss auf den relativen Lebensdauerverlust berücksichtigt wird. Demgemäß werden bevorzugt kontinuierlich über die Zeit Messfahrten mit einem oder mehreren Messfahrzeugen vorgenommen, um den relativen Lebensdauerverlust kontinuierlich auf einem aktuellen Stand zu halten.

Hinsichtlich der Ermittlung der Restlebensdauer ist daher vorzugsweise vorgesehen, dass der relative Lebensdauerverlust vom Zeitpunkt der Nutzung abhängig ist und bei der Ermittlung des Lebensdauerverlusts jeweils der Zeitpunkt einer Teilmenge der tatsächlichen Nutzungen des wenigstens einen Streckenabschnitts durch das Fahrzeug berücksichtigt wird. Mit anderen Worten wird gegebenenfalls je nach der zeitlichen Auflösung für den jeweiligen relativen Lebensdauerverlust (mithin also je nach den Zeitabständen zwischen unterschiedlichen Werten für den relativen Lebensdauerverlust) jeder oder mehreren Nutzungen je nach ihrem Zeitpunkt ein unterschiedlicher relativer Lebensdauerverlust zugeordnet. Hierbei versteht es sich, dass gegebenenfalls auch für jeden Zeitpunkt der Nutzung ein entsprechender Wert für den relativen Lebensdauerverlust durch Interpolation ermittelt werden kann.

Die jeweiligen Messungen am Messfahrzeug können bei gesonderten Testfahrten mit einer repräsentativen Beladung des Messfahrzeugs vorgenommen werden, welche der typischen Beladung des Fahrzeugs im normalen Transportbetrieb entspricht. Vorzugsweise werden jedoch bereits die für die Beanspruchung der Fahrzeugkomponente repräsentativen Messungen bereits an einem Fahrzeug im normalen (beispielsweise fahrplanmäßigen) Transportbetrieb vorgenommen. Dies hat den Vorteil, dass man besonders realistische Messergebnisse erhält.

Wie bereits erwähnt, müssen die Messungen nicht notwendigerweise an dem Fahrzeug vorgenommen werden, für dessen Fahrzeugkomponente die Restlebensdauer ermittelt werden soll. Vielmehr können die Messungen auch an einem anderen Fahrzeug, insbesondere auch an einem Fahrzeug eines anderen Fahrzeugtyps vorgenommen werden und dann über eine entsprechende bekannte Korrelation zwischen den Beanspruchungen der beiden Fahrzeuge umgerechnet werden. Vorzugsweise werden die für die Beanspruchung der Fahrzeugkomponente repräsentativen Messungen an einem als Messfahrzeug verwendeten Vergleichsfahrzeug desselben Fahrzeugtyps vorgenommen, um einen besonders einfachen Transfer auf das tatsächlich zu betrachtende Fahrzeug zu ermöglichen.

Bei bevorzugten Varianten des erfindungsgemäßen Verfahrens ist vorgesehen, dass zusätzlich zur Berechnung der Restlebensdauer der betreffenden Fahrzeugkomponente für die Nutzung des Fahrzeugs auf dem bisher genutzten Streckenabschnitt wenigstens eine Vergleichsrechnung der Restlebensdauer der betreffenden Fahrzeugkomponente bei der Nutzung des Fahrzeugs auf einem anderen Streckenabschnitt vorgenommen wird. Hiermit ist in vorteilhafter Weise eine hinsichtlich der Nutzungsdauer der Fahrzeuge bzw. ihrer Komponenten optimierte Planung des Einsatzes der Fahrzeuge möglich.

Demgemäß ist vorzugsweise vorgesehen, dass der relative Lebensdauerverlust für den wenigstens einen Streckenabschnitt ein erster relativer Lebensdauerverlust für den wenigstens einen ersten Streckenabschnitt ist, die unter Verwendung des ersten relativen Lebensdauerverlusts ermittelte Restlebensdauer eine erste Restlebensdauer für den weiteren Betrieb des Fahrzeugs auf dem wenigstens einen ersten Streckenabschnitt ist und unter Verwendung eines zweiten relativen Lebensdauerverlusts für wenigstens einen zweiten Streckenabschnitt des Streckennetzes eine Ermittlung einer zweiten Restlebensdauer für den weiteren Betrieb des Fahrzeugs auf dem wenigstens einen zweiten Streckenabschnitt erstellt wird, wobei der zweite relative Lebensdauerverlust für den wenigstens einen zweiten Streckenabschnitt und zumindest den Typ des Fahrzeugs vorab ermittelt wurde. Es versteht sich hierbei, dass die Ermittlung des zweiten relativen Lebensdauerverlusts ebenfalls in der oben beschriebenen Weise vorgenommen werden kann.

Die Ermittlung der Restlebensdauer kann ohne Berücksichtigung der zukünftigen Entwicklung des relativen Lebensdauerverlusts erfolgen. Bei bevorzugten Varianten des erfindungsgemäßen Verfahrens ist jedoch vorgesehen, dass die zu erwartende Entwicklung des relativen Lebensdauerverlusts des betreffenden Streckenabschnitts berücksichtigt wird. Mithin kann also beispielsweise eine Erhöhung des relativen Lebensdauerverlusts durch eine zu erwartende verschleißbedingte Verschlechterung der Fahrstrecke bei der Ermittlung der Restlebensdauer berücksichtigt werden. Mit anderen Worten ist es also in vorteilhafter Weise möglich, bei der Ermittlung der Restlebensdauer auch die zu erwartende Entwicklung des Zustands des jeweiligen Streckenabschnitts (beispielsweise Verschlechterung durch Verschleiß oder aber auch Verbesserungen durch geplante Instandhaltungsmaßnahmen etc.) zu berücksichtigen.

Vorzugsweise ist daher vorgesehen, dass der relative Lebensdauerverlust vom Zeitpunkt der Nutzung abhängig ist und bei der Ermittlung der Restlebensdauer eine Prognose für die zukünftige Entwicklung des relativen Lebensdauerverlusts verwendet wird. Die Prognose für die zukünftige Entwicklung des relativen Lebensdauerverlusts kann auf beliebige geeignete Weise erfolgen. Vorzugsweise wird die Prognose unter Verwendung einer Historie des relativen Lebensdauerverlusts ermittelt, da aus der Historie eine besonders einfache Entwicklung einer realitätsnahen Prognose möglich ist.

Die Messanordnung bzw. Sensorik auf dem Messfahrzeug ist grundsätzlich in beliebiger geeigneter Weise entsprechend den für die jeweilige Fahrzeugkomponente zu ermittelnden, die Lebensdauer der Fahrzeugkomponente beeinflussenden Größen gestaltet. Typischerweise kommen Beschleunigungssensoren, Wegsensoren, akustische Sensoren und jegliche anderen Sensoren zum Einsatz, welche Aufschluss über dynamische Belastungen am Fahrzeug liefern können. Die betreffenden Sensoren können an beliebiger geeigneter Stelle im Fahrzeug (vorzugsweise in der Nähe der zu betrachtenden Fahrzeugkomponente) angeordnet sein. Je nach Art der zu ermittelnden Belastungen kann es sinnvoll sein, nach der Primärfederung, also beispielsweise am Fahrwerksrahmen, zu messen. Besonders aufschlussreich kann es aber auch sein, die betreffenden Sensoren möglichst nahe an den Kontaktbereichen zwischen Fahrzeug und Fahrstrecke anzuordnen, um ein möglichst unverfälschtes Bild von der Wechselwirkung zwischen dem Fahrzeug und der Fahrstrecke zu erhalten.

Vorzugsweise ist daher vorgesehen, dass das Messfahrzeug eine Mehrzahl von Rädern sowie über eine Federung darauf abgestützte Komponenten aufweist und die für die Beanspruchung der Fahrzeugkomponente repräsentativen Messungen unter Verwendung wenigstens eines Beschleunigungssensors und/oder wenigstens eines akustischen Sensors und/oder wenigstens eines parallel zu der Federung zwischen die Räder und die darauf abgestützten Komponenten geschalteten Wegsensors erfolgen. Besonders gute Aussagen hinsichtlich der Wechselwirkung zwischen Fahrzeug und Fahrstrecke sind möglich, wenn das Messfahrzeug ein Fahrwerk mit einer Mehrzahl von Rädern und einem über eine Primärfederung auf Radlagern der Räder abgestützten Fahrwerksrahmen aufweist und die für die Beanspruchung der Fahrzeugkomponente repräsentativen Messungen unter Verwendung von wenigstens zwei parallel zu der Primärfederung zwischen die Räder und den Fahrwerksrahmen geschalteten Wegsensoren erfolgen. Besonders günstig ist es hierbei, wenn wenigstens vier jeweils zu zwei Radeinheiten (also z. B. Einzelradpaaren oder Radsätzen) zusammengefassten Rädern jeweils wenigstens ein entsprechender Wegsensor zugeordnet ist, da hierdurch in einfacher Weise auch eine Berücksichtigung der Verwindung des Fahrwegs möglich ist.

Bei der Fahrzeugkomponente, deren Restlebensdauer zu ermitteln ist, kann es sich grundsätzlich um eine beliebige durch die Wechselwirkung zwischen Fahrzeug und Fahrstrecke beanspruchte Komponente des Fahrzeugs handeln. Vorzugsweise ist die Fahrzeugkomponente, deren Restlebensdauer ermittelt wird, eine Fahrwerkskomponente des Fahrzeugs, da im Zusammenhang mit derartigen Fahrwerkskomponenten zum einen besonders gute Aussagen hinsichtlich ihrer Restlebensdauer getroffen werden können und es sich bei diesen Komponenten zum anderen in der Regel um wichtige, sicherheitsrelevante Komponenten des Fahrzeugs handelt.

Die vorliegende Erfindung betrifft weiterhin ein System zum Bestimmen der Restlebensdauer einer Fahrzeugkomponente eines auf wenigstens einem vorgegebenen Streckenabschnitt eines Streckennetzes betriebenen Fahrzeugs, insbesondere eines Schienenfahrzeugs, mit einer Datenverarbeitungseinrichtung, die dazu ausgebildet ist, Restlebensdauerdaten zu ermitteln, welche für die Restlebensdauer einer im Betrieb durch die Wechselwirkung zwischen dem Fahrzeug und dem Streckenabschnitt mechanisch beanspruchten Fahrzeugkomponente des Fahrzeugs nach einem Nutzungsintervall des wenigstens einen Streckenabschnitts repräsentativ sind. Die Restlebensdauerdaten der Fahrzeugkomponente werden aus bisherigen Lebensdauerverlustdaten und aktuellen Lebensdauerverlustdaten ermittelt, die in der Datenverarbeitungseinrichtung gespeichert sind, wobei die bisherigen Lebensdauerverlustdaten für einen zu Beginn des Nutzungsintervalls für die Fahrzeugkomponente vorgegebenen bisherigen Lebensdauerverlust repräsentativ sind und die aktuellen Lebensdauerverlustdaten für einen dem Nutzungsintervall zugeordneten Lebensdauerverlust der Fahrzeugkomponente repräsentativ sind. Erfindungsgemäß ist die Datenverarbeitungseinrichtung dazu ausgebildet, den aktuellen Lebensdauerverlust anhand von Nutzungsdaten und relativen Lebensdauerverlustdaten zu ermitteln, die jeweils in der Datenverarbeitungseinrichtung gespeichert sind, wobei die Nutzungsdaten für eine zuvor erfasste tatsächliche Nutzung des wenigstens einen Streckenabschnitts durch das Fahrzeug repräsentativ sind, die relativen Lebensdauerverlustdaten für einen auf die tatsächliche Nutzung des wenigstens einen Streckenabschnitts bezogenen relativen Lebensdauerverlust repräsentativ sind und die relativen Lebensdauerverlustdaten für den wenigstens einen Streckenabschnitt und zumindest den Typ des Fahrzeugs vorab ermittelt wurden. Mit diesem System lassen sich die oben geschilderten Vorteile und Varianten in demselben Maße realisieren, sodass diesbezüglich auf die obigen Ausführungen Bezug genommen wird. Insbesondere lässt sich mit dem erfindungsgemäßen Systemen das oben beschriebene erfindungsgemäße Verfahren durchführen.

Die Datenverarbeitungseinrichtung kann dabei grundsätzlich an beliebiger Stelle angeordnet sein. Beispielsweise ist es möglich, die Datenverarbeitungseinrichtung an einer zentralen Stelle (beispielsweise in einer Datenzentrale) anzuordnen, um an dieser Stelle beispielsweise eine zentrale Überwachung der Restlebensdauer und eine Einsatzplanung der einzelnen Fahrzeuge zu ermöglichen. Es versteht sich jedoch, dass die Datenverarbeitungseinrichtung aber auch dezentral angeordnet sein kann. Beispielsweise ist es auch möglich, die Datenverarbeitungseinrichtung im jeweiligen Fahrzeug selbst anzusiedeln, um die entsprechenden Informationen über die Restlebensdauer der Fahrzeugkomponenten im Fahrzeug verfügbar zu haben. Es versteht sich hierbei, dass in diesem Fall dann die jeweilige Restlebensdauer auf geeignete Weise zu einer entsprechenden zentralen Stelle für die Durchführung der Einsatzplanung oder dergleichen übermittelt werden kann.

Vorzugsweise umfasst das erfindungsgemäße System wenigstens ein Messfahrzeug (beispielsweise das Fahrzeug selbst und/oder ein entsprechendes Vergleichsfahrzeug) mit einer mit der Datenverarbeitungseinrichtung verbindbaren Messeinrichtung. Die Messeinrichtung ist dann (zum Zweck der Ermittlung des relativen Lebensdauerverlusts) dazu ausgebildet, für die Beanspruchung der Fahrzeugkomponente repräsentative Messungen an dem Messfahrzeug während wenigstens eines Durchfahrens des wenigstens einen Streckenabschnitts vorzunehmen.

Die Verarbeitung der über die Messeinrichtung erfassten Daten kann bereits ganz oder teilweise in der Messeinrichtung erfolgen. Vorzugsweise ist die Messeinrichtung dazu ausgebildet, für die Beanspruchung der Fahrzeugkomponente repräsentative Beanspruchungsdaten zu erfassen und an die Datenverarbeitungseinrichtung weiterzugeben. Die Datenverarbeitungseinrichtung ist in diesem Fall dazu ausgebildet, die relativen Lebensdauerverlustdaten unter Verwendung der Beanspruchungsdaten zu ermitteln.

Die Messeinrichtung kann grundsätzlich in beliebiger geeigneter Weise aufgebaut sein. Vorzugsweise ist sie als hierarchisch gegliedertes System mit mehreren Ebenen aufgebaut, die über entsprechende Schnittstellen miteinander kommunizieren können. Vorzugsweise umfasst die Messeinrichtung daher wenigstens einen Sensor, eine erste Steuereinrichtung und eine zweite Steuereinrichtung, wobei der wenigstens eine Sensor zur Erfassung und Weitergabe der Beanspruchungsdaten an die erste Steuereinrichtung ausgebildet ist, die erste Steuereinrichtung zur Sammlung, Vorverarbeitung und Weitergabe der Beanspruchungsdaten an die zweite Steuereinrichtung ausgebildet ist und die zweite Steuereinrichtung zur Sammlung, Weiterverarbeitung und Weitergabe der Beanspruchungsdaten an die Datenverarbeitungseinrichtung ausgebildet ist.

Die Kommunikation zwischen den einzelnen Ebenen der Messeinrichtung kann auf beliebige geeignete Weise erfolgen. Vorzugsweise sind der wenigstens eine Sensor und die erste Steuereinrichtung über einen ersten Datenbus und/oder die erste Steuereinrichtung und die zweite Steuereinrichtung über einen zweiten Datenbus verbunden, da eine solche Verbindung über einen Datenbus (beispielsweise einen CAN-Bus) besonders einfach und flexibel gestaltet werden kann. Insbesondere ist es damit möglich, der Messeinrichtung nachträglich weitere oder andere Sensoren hinzuzufügen.

Besonders vorteilhaft ist es in diesem Zusammenhang weiterhin, die erste Steuereinrichtung räumlich nahe an der wenigstens einen Sensoreinrichtung anzuordnen, da hiermit der Verkabelungsaufwand erheblich reduziert werden kann.

Um den Aufwand bei der nachfolgenden Datenverarbeitung gering zu halten und eine hohe Flexibilität bei der Gestaltung der Messeinrichtung zu erzielen, ist die erste Steuereinrichtung vorzugsweise dazu ausgebildet, die Beanspruchungsdaten des wenigsten einen Sensors in ein Standardformat zu transformieren und derart formatiert weiterzugeben.

Vorzugsweise ist die Messeinrichtung modular aufgebaut, um eine einfache Anpassung an unterschiedliche Messaufgaben zu ermöglichen. Hierzu umfasst die Messeinrichtung vorzugsweise eine Mehrzahl von Sensoren und es ist eine Mehrzahl von unterschiedlichen zu erfassenden Beanspruchungsdaten vorgebbar. Die erste Steuereinrichtung ist dann dazu ausgebildet, in Abhängigkeit von einer Vorgabe der zu erfassenden Beanspruchungsdaten unterschiedliche Sensoren der Mehrzahl von Sensoren zur Weitergabe von deren erfassten Beanspruchungsdaten anzusprechen. Bevorzugt ist zumindest einer der Sensoren als intelligenter Sensor ausgebildet, der entsprechende Skalierungsdaten gespeichert hat, anhand derer seine Messsignale in entsprechend normierte Messdaten umgewandelt werden können.

Um den über die Messeinrichtung erfassten Daten eine Position zuordnen zu können, ist vorzugsweise vorgesehen, dass die Messeinrichtung eine Positionserfassungseinrichtung umfasst, die zur Erfassung der Position des Messfahrzeugs zum Zeitpunkt der Erfassung der jeweiligen Beanspruchungsdaten und zum Verknüpfen der Beanspruchungsdaten mit einer Positionskennung ausgebildet ist. Hierdurch ist es nicht zuletzt möglich, aus den erfassten Daten detaillierte Aussagen über den aktuellen Zustand des befahrenen Streckenabschnitts zu gewinnen.

Weiterhin umfasst die Messeinrichtung vorzugsweise eine Zeiterfassungseinrichtung, die zur Erfassung des Zeitpunkts der Erfassung der jeweiligen Beanspruchungsdaten und zum Verknüpfen der Beanspruchungsdaten mit einer Zeitkennung ausgebildet ist. Hierdurch ist es in vorteilhafter Weise möglich, eine Historie des Zustands des Messfahrzeugs, insbesondere aber auch des Streckenabschnitts zu erstellen und für spätere Auswertungen zu nutzen.

Die vorliegende Erfindung betrifft weiterhin ein Messfahrzeug, insbesondere ein Schienenfahrzeug, für ein erfindungsgemäßes System mit einem Fahrwerk mit wenigstens zwei Radeinheiten, die jeweils zwei Räder umfassen, einer über eine Federung auf den Radlagern der Räder der beiden Radeinheiten abgestützten Fahrzeugeinheit und einer Messeinrichtung. Die Messeinrichtung weist zur Erfassung von Beanspruchungsdaten einer Fahrzeugkomponente des Messfahrzeugs wenigstens vier Wegsensoren auf, wobei jedem der Räder der beiden Radeinheiten wenigstens ein Wegsensor zugeordnet ist, der parallel zu der Federung zwischen das jeweilige Rad und die Fahrzeugeinheit geschaltet ist. Hiermit lassen sich zum einen die oben beschriebenen Varianten und Vorteile in demselben Maße realisieren, sodass diesbezüglich auf die obigen Ausführungen Bezug genommen wird.

Es versteht sich hierbei, dass es sich bei der Fahrzeugeinheit letztlich um eine beliebige Einheit handeln kann. So kann beispielsweise vorgesehen sein, dass es sich bei den Radeinheiten um Einzelachsfahrwerke handelt, auf denen als Fahrzeugeinheit der Wagenkasten des Fahrzeugs abgestützt ist. Ebenso kann die Fahrzeugeinheit ein Fahrwerksrahmen (z. B. ein Drehgestellrahmen), der dann zum einen auf den beiden Radeinheiten abgestützt ist und auf dem sich dann zum anderen der Wagenkasten des Fahrzeugs abstützt.

Unabhängig von der Ermittlung der Restlebensdauer einer Fahrzeugkomponente ist mit einem solchen Messfahrzeug aber auch eine besonders präzise Erfassung des aktuellen Zustands des befahrenen Streckenabschnitts sowie eine vorteilhafte Überwachung und Nutzungs- bzw. Instandhaltungsplanung der Streckenabschnitte eines Streckennetzes möglich.

Die vorliegende Erfindung lässt sich im Zusammenhang mit beliebigen Fahrzeugen realisieren, die regelmäßig auf vorgegebenen Streckenabschnitten eines Streckennetzes betrieben werden. Hierbei kann es sich beispielsweise um Kraftfahrzeuge handeln, die im öffentlichen Personennahverkehr auf vorgegebenen Routen zum Einsatz kommen. Besonders vorteilhaft lässt sich die Erfindung im Zusammenhang mit Schienenfahrzeugen anwenden, da diese naturgemäß in der Regel stets einen genau definierten Streckenabschnitt eines Streckennetzes befahren.

Weitere bevorzugte Ausgestaltungen der Erfindung ergeben sich aus den Unteransprüchen bzw. der nachstehenden Beschreibung bevorzugter Ausführungsbeispiele, welche auf die beigefügten Zeichnungen Bezug nimmt. Es zeigen:

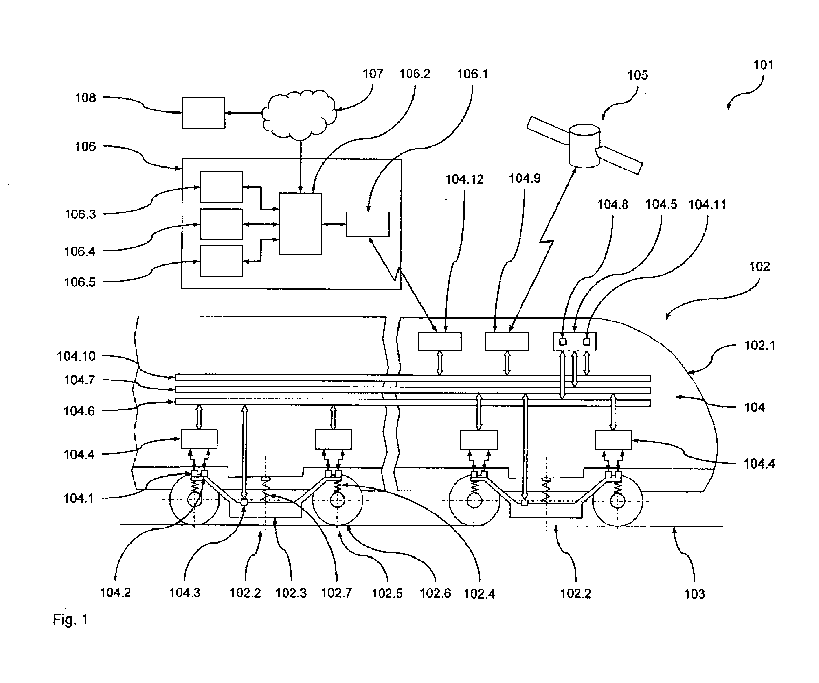

- Figur 1: eine schematische Seitenansicht eines Teils einer bevorzugten Ausführungsform des erfindungsgemäßen Systems zum Bestimmen der Restlebensdauer einer Komponente eines Fahrzeugs, das eine bevorzugte Ausführungsform des erfindungsgemäßen Messfahrzeugs umfasst und mit dem eine bevorzugte Ausführung des erfindungsgemäßen Verfahrens zum bestimmen der Restlebensdauer einer Komponente eines Fahrzeugs durchgeführt werden kann.

Im Folgenden wird unter Bezugnahme auf die Figur 1 eine bevorzugte Ausführung des erfindungsgemäßen Systems 101 zum Bestimmen der Restlebensdauer einer Komponente eines Fahrzeugs, das eine bevorzugte Ausführungsform des erfindungsgemäßen Messfahrzeugs 102 umfasst. Mit dem System 101 kann eine bevorzugte Ausführung des erfindungsgemäßen Verfahrens zum Bestimmen der Restlebensdauer einer Komponente eines Fahrzeugs durchgeführt werden

Das als Schienenfahrzeug ausgebildete Messfahrzeug 102 wird während einer Messfahrt auf einem vorgegebenen Streckenabschnitt 103 eines Schienennetzes betrieben. Während dieser Messfahrten werden an dem Messfahrzeug 102 eine Reihe von Messungen durchgeführt, welche zum einen Rückschlüsse auf den aktuellen Zustand des Streckenabschnitts 103 und zum anderen Rückschlüsse auf die Beanspruchung bestimmter Fahrzeugkomponenten des Messfahrzeugs 102 zulässt, die im Betrieb durch die Wechselwirkung zwischen dem Messfahrzeug 102 und dem Streckenabschnitt 103 mechanisch beansprucht sind.

Wie nachfolgend noch erläutert wird, können die so gewonnenen Daten hinsichtlich des Zustands des Fahrwegs (so genannte Gleiseingangsdaten) dazu genutzt werden, die Nutzung und gegebenenfalls die Instandhaltung des Streckenabschnitts 103 zu planen. Insbesondere können die so gewonnenen Gleiseingangsdaten genutzt werden, bei Überschreiten bestimmter Schwellenwerte bestimmte vorgebbare Reaktionen auszulösen. So kann beispielsweise vorgesehen sein, dass in Abhängigkeit von dem Grad der Zustandverschlechterung des Streckenabschnitts 103 an bestimmten Stellen Geschwindigkeitsbeschränkungen eingerichtet werden. Ebenso können je nach Grad der Zustandverschlechterung entsprechende Instandhaltungsmaßnahmen ausgelöst werden, sobald entsprechende Grenzwerte überschritten sind.

Wie nachfolgend ebenfalls noch detaillierter erläutert wird, können die über die Messungen am Messfahrzeug 102 gewonnenen Daten hinsichtlich der Beanspruchung bestimmter Fahrzeugkomponenten erfindungsgemäß dazu genutzt werden, um in Abhängigkeit von der tatsächlichen Nutzung des Streckenabschnitts 103 Aussagen hinsichtlich der noch verbleibenden Restlebensdauer dieser Fahrzeugkomponenten zu treffen. Mit anderen Worten können die so gewonnenen Daten dazu genutzt werden, eine Korrelation zwischen der tatsächlichen Nutzung des Streckenabschnitts 103 und dem daraus resultierenden tatsächlichen Lebensdauerverlust, mithin also einen auf den Streckenabschnitt 103 bezogenen relativen Lebensdauerverlust zu ermitteln.

Dieser relative Lebensdauerverlust kann nicht nur für Komponenten des Messfahrzeugs 102 genutzt werden. Vielmehr ist es zum einen möglich, diesen so ermittelten relativen Lebensdauerverlust auch für die Ermittlung der Restlebensdauer entsprechender Fahrzeugkomponenten anderer Fahrzeuge desselben Typs (wie das Messfahrzeug) zu verwenden. Darüber hinaus können diese mit dem Messfahrzeug 102 gewonnenen Daten gegebenenfalls auch genutzt werden, Aussagen über der Restlebensdauer entsprechender Fahrzeugkomponenten von Fahrzeugen eines anderen Typs zu treffen, sofern eine ausreichend genau definierte Korrelation zwischen dem Beanspruchungen beider Fahrzeuge verfügbar ist.

Das Messfahrzeug 102 weist einen Wagenkasten 102.1 auf, der auf mehreren Fahrwerken in Form von Drehgestellen 102.2 abgestützt ist. Jedes Drehgestell 102.2 umfasst einen Drehgestellrahmen 102.3, der jeweils über eine Primärfederung 102.4 auf zwei Radeinheiten 102.5 abgestützt ist. Jede Radeinheit 102.5 umfasst dabei zwei auf gegenüberliegenden Schienen aufstehende Räder 102.6. Der Wagenkasten 102.1 stützt sich über eine Sekundärfederung 102.7 auf dem Drehgestellrahmen 102.3 ab.

Das Messfahrzeug 102 weist weiterhin eine Messeinrichtung 104 auf, die eine Reihe von Sensoren 104.1, 104.2, 104.3 sowie eine Reihe erster Steuereinheiten 104.4 und eine zweite Steuereinheit 104.5 auf. Mit jeder ersten Steuereinheit 104.4 ist eine Reihe von Sensoren 104.1, 104.2 verbunden, die an dem Drehgestellrahmen 102.3 angeordnet sind. Die jeweilige erste Steuereinheit 104.4 ist ebenfalls an dem zugehörigen Drehgestellrahmen 102.3 angeordnet (was aus Gründen der Übersichtlichkeit in Figur 1 nicht dargestellt ist) sowie über einen Datenbus 104.6 bzw. 104.7 (beispielsweise einen so genannten CAN-Bus) mit der im Wagenkasten 102.1 angeordneten zweiten Steuereinheit 104.5 verbunden.

Diese Gestaltung hat den Vorteil, dass zum einen zwischen den Sensoren 104.1 und 104.2 und der zugehörigen ersten Steuereinheit 104.4 (die jeweils am Drehgestellrahmen 102.3 angeordnet sind) nur eine vergleichsweise kurze Verkabelung erforderlich ist. Zum anderen sind dank der Busverbindung zwischen der jeweiligen ersten Steuereinheit 104.4 und der zweiten Steuereinheit 104.5 nur wenige Verbindungsleitungen zwischen dem Drehgestell 102.2 und dem Wagenkasten 102.1 erforderlich.

Es versteht sich jedoch, dass bei anderen Varianten der Erfindung auch vorgesehen sein kann, dass schon zwischen den (dann entsprechend gestalteten) Sensoren und der ersten Steuereinheit bereits eine Busverbindung bestehen kann. Ebenso kann natürlich auch vorgesehen sein, dass die erste Steuereinheit fehlt und ihre (nachfolgend noch detaillierter beschriebene Funktion) in der zweiten Steuereinheit realisiert ist.

Bei den Sensoren 104.1 handelt es sich um parallel zu der Primärfederung 102.4 zwischen den Drehgestellrahmen 102.3 und das Radlager des jeweiligen Rades 102.6 geschaltete Wegsensoren, welche die Abstandsänderung zwischen dem Radlager und dem Drehgestellrahmen 102.3, also das Einfedern der Primärfederung 102.4 erfassen. Mithin sind also je Drehgestellrahmen 102.3 vier solcher Wegsensoren 104.1 vorgesehen. Es versteht sich jedoch, dass bei anderen Varianten der Erfindung auch vorgesehen sein kann, dass die Wegsensoren 104.1 die Abstandsänderung zwischen dem Radlager des jeweiligen Rades 102.6 und anderen darauf abgestützten Komponenten (102.1, 102.3) erfassen können.

Bei den Sensoren 104.2 handelt es sich um Beschleunigungssensoren, welche in den für die gewünschte Messung erforderlichen Raumrichtungen die am Drehgestellrahmen 102.3 wirkenden Beschleunigungen aufnehmen.

Bei den Sensoren 104.3 handelt es sich im vorliegenden Beispiel um akustische Sensoren, welche direkt mit dem Datenbus 104.6 bzw. 104.7 verbunden sind. Der Sensor 104.3 ist dabei in der Lage, seine Messsignale selbst in entsprechend standardisierte Messdaten umzuwandeln und über den Datenbus weiterzugeben. Derartige busfähige Sensoren werden vor allen Dingen dann eingesetzt, wenn eine Datenübertragung mit einer größeren Bandbreite erforderlich ist.

Es versteht sich, dass bei anderen Varianten der Erfindung weniger Sensoren oder noch beliebige weitere Sensoren (z. B. Temperatursensoren etc.) vorgesehen sein können, die mit der ersten Steuereinheit 104.2 oder dem Datenbus 104.6 bzw. 104.7 verbunden sind. Art und Anzahl der Sensoren der Messeinrichtung 104 richtet sich dabei nach den gewünschten Messdaten, die zur Auswertung herangezogen werden sollen. Insbesondere versteht es sich, dass bei anderen Varianten der Erfindung auch lediglich ein einziges Drehgestell mit der oben beschriebenen Sensorik ausgestattet sein kann.

Der jeweilige Sensor 104.1, 104.2 ist als intelligenter Sensor mit einem Speicher gestaltet, in dem Skalierungsdaten für den jeweiligen Sensor 104.1 bzw. 104.2 abgelegt sind. Neben den Skalierungsdaten können in dem Speicher des jeweiligen Sensors 104.1 bzw. 104.2 noch weitere sensorbezogene Daten (wie beispielsweise Kalibrierdaten, Diagnosedaten, Prüfalgorithmen etc.) abgelegt sein, welche während des Betriebs oder der Wartung des Sensors genutzt werden können.

Die erste Steuereinheit 104.4 liest die Skalierungsdaten aus dem jeweiligen Sensor 104.1 bzw. 104.2 aus und verwendet diese Skalierungsdaten, um die Messsignale des jeweiligen Sensors 104.1 bzw. 104.2 in entsprechende standardisierte und digitalisierte Messdaten umzuwandeln. Diese modulare Gestaltung hat den Vorteil, dass die Messeinrichtung 104 einfach erweiterbar und an gewünschte Messalgorithmen anpassbar ist, indem bestimmte Sensoren ausgetauscht oder ergänzt werden.

Zu bestimmten Zeiten (beispielsweise beim Einschalten der Messeinrichtung 104 oder beim Eintreten beliebiger anderer vorgebbarer Ereignisse) überprüft die zweite Steuereinrichtung 104.5 (gegebenenfalls über die erste Steuereinrichtung 104.4) die aktuelle Konfiguration der Messeinrichtung 104, insbesondere den Status sämtlicher Sensoren 104.1 bis 104.3. Hierbei kann die zweite Steuereinrichtung 104.5 gegebenenfalls eine vorgebbare Prüf- und/oder Konfigurationsroutine durchführen, mit der die Messeinrichtung 104 gemäß entsprechenden Vorgaben konfiguriert wird. Insbesondere kann im Rahmen einer solchen Konfigurationsroutine festgelegt werden, welche Messdaten welcher Sensoren 104.1 bis 104.3 bei der aktuellen Messfahrt erfasst werden sollen.

Die zweite Steuereinrichtung 104.5 fragt dann während der Messfahrt auf dem Streckenabschnitt 103 nach einem geeigneten vorgebbaren Abfrageprotokoll die gewünschten Messdaten über die ersten Steuereinrichtungen 104.4 von den Sensoren 104.1 und 104.2 bzw. direkt von den Sensoren 104.3 ab. Dies hat den Vorteil, dass durch eine geeignete Gestaltung des Abfrageprotokolls die so erhaltenen Messdaten sämtlicher Sensoren 104.1 bis 104.3 zeitlich miteinander synchronisiert sind.

Das Abfrageprotokoll kann auf beliebige geeignete Weise gestaltet sein. Beispielsweise kann der Zeitpunkt des Aussendens einer entsprechenden Abfragenachricht als Referenzpunkt verwendet werden und es können die Laufzeiten gemessen werden, bis das entsprechende Sensorsignal aufgenommen wurde, um so eine zeitliche Relation zwischen den einzelnen Messdaten herzustellen.

Die erste Steuereinrichtung 104.4 empfängt die entsprechenden Messsignale der mit ihr verbundenen Sensoren 104.1, 104.2, digitalisiert diese und verknüpft sie mit einer Identifikationsinformation sowie gegebenenfalls weiteren sensorbezogenen Daten des jeweiligen Sensors (beispielsweise einer Information über den Sensortyp, die Seriennummer, die Skalierungsdaten etc.). Gegebenenfalls kann die erste Steuereinrichtung 104.4 auch noch eine weitere Vorverarbeitung (beispielsweise eine Filterung, Fehlerkorrektur etc.) vornehmen. Vergleichbares kann auch durch die Sensoren 104.3 vorgenommen werden, welche ihre Messdaten unmittelbar an die zweite Steuereinrichtung 104.5 liefern.

Die so aufbereiteten Messdaten werden in der zweiten Steuereinrichtung 104.5 nach einem vorgebbaren Protokoll verarbeitet. Unter anderem erfolgt in der zweiten Steuereinrichtung 104.5 eine schnelle Erfassung der Sensordaten sowie ihre Vorverarbeitung gemäßvorgegebener Algorithmen. So werden die für die Sicherheit und die Festigkeit des Fahrzeugs 102 maßgeblichen Informationen über den Zustand des Streckenabschnitts 103 in bekannter Weise aus den Sensordaten (also der Fahrzeugreaktion) extrahiert und kontinuierlich in geeigneter Form als Gleiseingangsdaten protokolliert. Weiterhin umfasst die Vorverarbeitung beispielsweise die Generierung von Ereignissen (Warnungen, Alarme, Fehler- und Statusmeldungen etc.), das Inkrementieren von Zählverfahren (z. B. so genannter Rainflow-Matrizen) für die gemessenen oder aus Messgrößen abgeleiteten Größen, die Generierung von Spektren durch FFT (Fast Fourier-Transformation) aus gemessenen oder hieraus abgeleiteten Daten etc.

Die so gewonnenen Daten werden durch die zweite Steuereinrichtung 104.5 mit einer für ihren Erfassungszeitpunkt repräsentativen Zeitkennung sowie mit einer für den Ort ihrer Erfassung repräsentativen Ortskennung verknüpft. Zur Ermittlung der Zeitkennung umfasst die zweite Steuereinrichtung 104.5 eine entsprechend zuverlässige Echtzeitquelle 104.8 (beispielsweise eine ausreichend regelmäßig synchronisierte Echtzeituhr oder dergleichen).

Zur Ermittlung der Ortskennung umfasst die Messeinrichtung 104 eine Positionsbestimmungseinrichtung 104.9, die über einen weiteren Datenbus 104.10 (beispielsweise einen weiteren CAN-Bus) mit der zweiten Steuereinrichtung 104.5 verbunden ist. Im vorliegenden Beispiel handelt es sich bei der Positionsbestimmungseinrichtung um ein Modul 104.9 eines satellitengestützten Positionsbestimmungssystems 105 (z. B. GPS, Galileo etc.). Es versteht sich jedoch, dass bei anderen Varianten der Erfindung auch eine beliebige andere Methode der Positionsbestimmung verwendet werden kann (beispielsweise eine Positionsbestimmung auf der Basis des Passierens bestimmter Kontrollpunkte und einer Messung der Fahrgeschwindigkeit etc.).

Hierbei versteht es sich, dass insbesondere bei einer Nutzung eines satellitengestützten Positionsbestimmungssystems das über dieses System gelieferte Zeitsignal gegebenenfalls als Zeitquelle für die Ermittlung der Zeitkennung verwendet werden kann.

Die so aufbereiteten Messdaten werden zunächst als historische Datensequenz in einem Speicher 104.11 der zweiten Steuereinrichtung 104.5 nicht-flüchtig gespeichert (beispielsweise in Form einer eingebetteten Datenbank). Dabei versteht es sich, dass in der zweiten Steuereinrichtung bereits eine weitere Auswertung nach beliebigen vorgebbaren Algorithmen und Kriterien erfolgen kann, deren Ergebnis ebenfalls in dem Speicher 104.11 der zweiten Steuereinrichtung 104.5 abgelegt werden kann. Der Speicher 104.11 kann dabei beliebig gestaltet sein. So kann er beispielsweise über einen Massenspeicher (z. B. auf Basis von CF-Karten) realisiert sein.

Bei dem oben erwähnten Überschreiten bestimmter Grenzwerte (welches als Ereignis einen Alarm nach sich zieht) kann zusätzlich vorgesehen sein, dass entsprechende separate Hinweisdatensätze gespeichert werden, welche das entsprechende Ereignis ausreichend genau kennzeichnen. Insbesondere kann vorgesehen sein, dass diese Hinweisdatensätze mit den entsprechenden Abschnitten der historischen Datensequenz verknüpft sind, um später die Situation im Umfeld des so protokollierten Ereignisses analysieren zu können. Mit anderen Worten kann im Falle eines solchen Alarms aus allen bzw. ausgewählten Sensordaten eine Historie vordefinierbarer zeitlicher Länge vor und nach dem betreffenden Ereignis generiert werden.

Kontinuierlich oder zu beliebigen vorgebbaren Zeitpunkten (beim Eintreten beliebigen zeitlichen und/oder nicht-zeitlichen Ereignissen) werden zumindest ausgewählte Teile der in dem Speicher 104.11 abgelegten Daten über ein erstes Kommunikationsmodul 104.12 der Messeinrichtung 104 an eine entfernte Datenzentrale 106 übertragen, die hierzu ein entsprechendes zweites Kommunikationsmodul 106.1 aufweist.

Der Zeitpunkt der Kommunikation kann von beliebiger Seite vorgegeben werden. Insbesondere kann vorgesehen sein, dass die Kommunikation immer dann aufgebaut wird, wenn durch das Fahrzeug 102 eine vorgegebene Datenmenge erfasst wurde. Ebenso kann aber auch vorgesehen sein, dass die Kommunikation an bestimmten Positionen auf dem Streckenabschnitt 103 erfolgt, an denen der Aufbau einer zuverlässigen Kommunikationsverbindung sichergestellt ist. Die Kommunikation erfolgt vorzugsweise (zumindest abschnittsweise) drahtlos. Hierzu kann das erste Kommunikationsmodul 104.12 als datenfähiges Mobilfunkmodul (z. B. GPRS, UMTS etc.) ausgebildet sein. Es versteht sich jedoch, was bei anderen Varianten auch eine kurzreichweitige drahtlose Verbindung gewählt sein kann (WLAN, Bluetooth, IrDA etc.), die dann beispielsweise bei einem planmäßigen Halt des Messfahrzeugs 102 zum Einsatz kommt.

Schließlich versteht es sich, dass der Datenaustausch zwischen dem Fahrzeug 102 und der Datenzentrale 106 bei anderen Varianten der Erfindung auch über eine drahtgebundene Verbindung (z. B. LAN etc.) bei längeren Aufenthalten des Fahrzeugs 102 an einer Haltestelle erfolgen kann. Ebenso ist natürlich auch ein Austausch der Daten über einen Austausch von Speichermedien (CF-Karten etc.) möglich.

Bei der Übertragung erfolgt eine Quittierung des korrekten Empfangs der Daten durch eine (mit dem zweiten Kommunikationsmodul 106.1 verbundene) Verarbeitungseinheit 106.2 der Datenzentrale 106. Die Verarbeitungseinheit 106.2 speichert die vom Fahrzeug 102 übertragenen Daten in einen entsprechenden Speicher 106.3 (beispielsweise ein Datenbanksystem oder dergleichen) der Datenzentrale 106. Nach erfolgreicher Quittierung können die übertragenen Daten aus dem Speicher 104.11 der Messeinrichtung 104 entfernt werden. Hierdurch wird sowohl eine mehrfache Übertragung von Daten als auch ein Datenverlust durch fehlerhafte Übertragung vermieden.

Die Verarbeitungseinheit 106.2 kann nach Art eines Datenbank-Servers gestaltet sein, der über ein Kommunikationsnetzwerk 107 (z. B. ein LAN, das Internet etc.) mit entsprechender Autorisierung über einen externen Rechner 108 zugänglich ist. Auf dem Datenbank-Server 106.2 und/oder dem externen Rechner 108 können entsprechende Auswertungsalgorithmen zur Verfügung stehen, über welche die aufbereiteten Daten der Messeinrichtung 104 nach beliebigen Kriterien ausgewertet werden können.

So kann beispielsweise der Betreiber des Streckennetzes mit dem Streckenabschnitt 103 auf diesem Wege detaillierte Informationen über den aktuellen Zustand des Streckenabschnittes 103 erlangen. Bevorzugt ist das Messfahrzeug 102 ein herkömmliches Schienenfahrzeug, das im normalen Linienverkehr auf dem Streckenabschnitt 103 zum Einsatz kommt und lediglich zusätzlich mit der Messeinrichtung 104 ausgestattet ist. Vorzugsweise wird je Streckenabschnitt 103 wenigstens ein derart aufgerüstetes Messfahrzeug 102 im Linienbetrieb eingesetzt. Der Betreiber des Streckennetzes kann mit dem erfindungsgemäßen System 101 somit über den Zugriff auf den Datenbank-Server 106.2 kontinuierlich aktualisierte Informationen über den Zustand seines Streckennetzes erlangen und so die Nutzungs- und Instandhaltungsplanung für sein Streckennetz optimieren.

Je nach der Vereinbarung mit dem Betreiber des Streckennetzes kann auch vorgesehen sein, dass der Datenbank-Server 106.2 im oben beschriebenen Fall der Erfassung einer Überschreitung bestimmter Grenzwerte (der Gleislage) aktiv den Betreiber des Streckennetzes informiert (z. B. per e-mail oder dergleichen). Hierbei werden dann vorzugsweise bereits entsprechend aufbereitete Informationen zu Zeitpunkt und Ort (auf dem Streckenabschnitt 103) der Grenzwertüberschreitung mitgeliefert.

Weiterhin kann mit dem erfindungsgemäßen Verfahren anhand der aus den Messdaten des Messfahrzeugs 102 gewonnenen Daten auf dem Datenbank-Server 106.2 mittels auf dem Datenbank-Server 106.2 und/oder dem externen Rechner 108 zur Verfügung stehender Auswertungsalgorithmen die Restlebensdauer von Fahrzeugkomponenten eines Schienenfahrzeuges bestimmt werden, welches auf einem oder mehreren der durch die Messfahrzeuge 102 erfassten Streckenabschnitte 103 betrieben wird.

Dies wird im Folgenden anhand eines Beispiels für ein nur auf einem Streckenabschnitt 103 betriebenes Fahrzeug beschrieben. Es versteht sich jedoch, dass die Ermittlung der Restlebensdauer ohne weiteres auch in analoger Weise für den Fall erfolgen kann, dass das Fahrzeug auf mehreren Streckenabschnitten betrieben wird.

Der Datenbank-Server 106.2 ermittelt im vorliegenden Beispiel aus den Messdaten des Messfahrzeugs 102 mit dem Streckenabschnitt 103 korrelierte Daten hinsichtlich der aus der Nutzung des Streckenabschnitts 103 resultierenden tatsächlichen Beanspruchungen von Fahrzeugkomponenten (beispielsweise des Drehgestellrahmens 102.3), welche aus der Wechselwirkung zwischen dem Messfahrzeug 102 und dem Streckenabschnitt 103 resultieren. Hieraus ermittelt der Datenbank-Server 106.2 für die jeweilige Fahrzeugkomponente (z. B. den Drehgestellrahmen 102.3), einen sich aus der Nutzung des Streckenabschnitts 103 ergebenden tatsächlichen relativen Lebensdauerverlust (beispielsweise einen Lebensdauerverlust pro Nutzung des betreffenden Streckenabschnitts).

Der Datenbank-Server 106.2 ermittelt den relativen Lebensdauerverlust der betreffenden Komponente (z. B. des Drehgestellrahmens 102.3) zunächst für das Messfahrzeug 102 und legt diesen als relativen Lebensdauerverlustdatensatz in dem Speicher 106.3 ab. In einen weiteren Speicher 106.4 der Datenzentrale sind für mehrere Fahrzeugtypen, welche auf dem Streckennetz mit dem Streckenabschnitt 103 betrieben werden Korrelationsdaten gespeichert, welche die Korrelation zwischen den Beanspruchungen der Fahrzeugkomponenten an dem Messfahrzeug 102 und den Beanspruchungen der entsprechenden Fahrzeugkomponente an einem Fahrzeug des jeweiligen Fahrzeugtyps beschreiben. Mit anderen Worten ist es mit diesen Korrelationsdaten möglich, aus der durch die Messfahrt(en) des Messfahrzeugs 102 ermittelten Beanspruchung einer Fahrzeugkomponente (z. B. des Drehgestellrahmens 102.3) die Beanspruchung einer entsprechenden Fahrzeugkomponente (z. B. des Drehgestellrahmens) eines anderen Fahrzeugs zu ermitteln, wenn dieses (annähernd) zum selben Zeitpunkt den Streckenabschnitt 103 durchfährt.

Im einfachsten Fall sind das Messfahrzeug 102 und das Fahrzeug, für dessen Komponente die Restlebensdauer ermittelt werden soll, identischer Bauart, sodass die Beanspruchungen der betreffenden Fahrzeugkomponente für das Messfahrzeug 102 und dieses Fahrzeug identisch angesetzt werden können.

Je nach verfügbarer Anzahl von Messdaten aus Messfahrten des Messfahrzeugs 102 kann vorgesehen sein, dass der relative Lebensdauerverlust für das Messfahrzeug 102 nur anhand einer einzigen Messfahrt zu einem bestimmten Zeitpunkt ermittelt wird. Bevorzugt ist jedoch vorgesehen, dass der relative Lebensdauerverlust als geeigneter Mittelwert über mehrere Messfahrten hinweg ermittelt wird, um (die im normalen Linienbetrieb naturgemäß auftretenden) Schwankungen der Beladung des Messfahrzeugs 102 zu berücksichtigen.

Es versteht sich hierbei, dass eine derartige Mittelwertbildung bevorzugt nur dann vorgenommen wird, wenn aus der oben beschriebenen Analyse des Zustands des Streckenabschnitts 103 (also der Analyse der Gleislage) ersichtlich ist, dass zwischen den einzelnen Messungen noch keine unzulässig hohe Änderung im Zustand des Streckenabschnitts 103 eingetreten ist. Wird bei einer weiteren Messfahrt festgestellt, dass eine vorgebbare zulässige Abweichung im Zustand des Streckenabschnitts 103 überschritten wurde, wird von dem Datenbank-Server 106.2 ein neuer relativer Lebensdauerverlustdatensatz angelegt.

Jeder so ermittelte relative Lebensdauerverlustdatensatz wird von dem Datenbank-Server 106.2 in dem Speicher 106.3 mit einer entsprechenden Zeitinformation verknüpft abgelegt, die repräsentiert für welchen Nutzungszeitraum des Streckenabschnitts 103 der betreffende relative Lebensdauerverlust anwendbar ist.

Zur Ermittlung der Restlebensdauer einer bestimmten Fahrzeugkomponente eines Fahrzeugs werden beispielsweise über den Rechner 108 der bisherigen Lebensdauerverlust (bei einem neuen Fahrzeug, dessen Restlebensdauer erstmals ermittelt wird, also der Wert Null) sowie Anzahl und Zeitpunkt der jeweiligen Nutzung des Streckenabschnitts 103 eingegeben und an den der Datenbank-Server 106.2 übermittelt. Anhand des Zeitpunkts der jeweiligen Nutzung ermittelt der Datenbank-Server 106.2 den zu verwendenden zugehörigen relativen Lebensdauerverlustdatensatz und ermittelt unter dessen Verwendung den jeweils durch die betreffende tatsächliche Nutzung entstandenen aktuellen Lebensdauerverlust. In Summe ergibt sich dann durch die zu berücksichtigenden vorangegangenen Nutzungen des Streckenabschnitts 103 ein gesamter aktueller Lebensdauerverlust für die betreffende Fahrzeugkomponente (z. B. den Drehgestellrahmen).

Dabei kann der Datenbank-Server 106.2 bereits bei der Berechnung des aktuellen Lebensdauerverlusts für die jeweilige Nutzung des Streckenabschnitts 103 die oben beschriebenen Korrelationsdaten aus dem Speicher 106.4 verwenden. Es ist jedoch auch möglich, dass diese erst bei der Ermittlung des gesamten aktuellen Lebensdauerverlusts berücksichtigt werden.

Anhand des so ermittelten gesamten aktuellen Lebensdauerverlusts und dem bisherigen Lebensdauerverlust ermittelt der Datenbank-Server 106.2 dann eine nach der betrachteten Nutzung verbleibende Restlebensdauer der betreffenden Fahrzeugkomponente bei einer weiteren Nutzung des Fahrzeugs auf dem Streckenabschnitt 103. Diese Ermittlung der Restlebensdauer kann ohne Berücksichtigung der zukünftigen Entwicklung des relativen Lebensdauerverlusts erfolgen. Vorzugsweise wird jedoch die zu erwartende Entwicklung des relativen Lebensdauerverlusts des Streckenabschnitts 103 berücksichtigt. Mithin kann also beispielsweise eine zu erwartende Erhöhung des relativen Lebensdauerverlusts (durch eine zu erwartende verschleißbedingte Verschlechterung der Fahrstrecke) bei der Ermittlung der Restlebensdauer durch den Datenbank-Server 106.2 berücksichtigt werden. Mit anderen Worten ist es also in vorteilhafter Weise möglich, bei der Ermittlung der Restlebensdauer auch die zu erwartende Entwicklung des Zustands des jeweiligen Streckenabschnitts (beispielsweise Verschlechterung durch Verschleiß oder aber auch Verbesserungen durch geplante Instandhaltungsmaßnahmen etc.) zu berücksichtigen.

Vorzugsweise ist daher vorgesehen, dass der Datenbank-Server 106.2 bei der Ermittlung der Restlebensdauer eine Prognose für die zukünftige Entwicklung des relativen Lebensdauerverlusts verwendet. Die Prognose für die zukünftige Entwicklung des relativen Lebensdauerverlusts (für das Fahrzeug und den Streckenabschnitt 103) kann auf beliebige geeignete Weise erfolgen. Vorzugsweise wird die Prognose unter Verwendung der in dem Speicher 106.3 abgelegten Historie des relativen Lebensdauerverlusts und entsprechender Prognosealgorithmen ermittelt, die in einem Speicher 106.5 der Datenzentrale 106 abgelegt sind.

Vorzugsweise kann der Betreiber des zu betrachtenden Fahrzeugs zusätzlich zur Berechnung der (ersten) Restlebensdauer der betreffenden Fahrzeugkomponente für die weitere Nutzung des Fahrzeugs auf dem bisher genutzten Streckenabschnitt 103 in analoger Weise wenigstens eine Vergleichsrechnung einer (zweiten) Restlebensdauer der betreffenden Fahrzeugkomponente bei der Nutzung des Fahrzeugs auf einem oder mehreren anderen Streckenabschnitten vornehmen lassen (für die entsprechende Messdaten bzw. relative Lebensdauerverlustdaten vorliegen). Hiermit ist in vorteilhafter Weise eine hinsichtlich der Nutzungsdauer der Fahrzeuge bzw. ihrer Komponenten optimierte Planung des Einsatzes der Fahrzeuge möglich.

Die vorliegende Erfindung wurde vorstehend ausschließlich anhand von Beispielen beschrieben, bei denen die Berechnung der Restlebensdauer in einem von dem zu betrachtenden Messfahrzeug 102 entfernten Datenbank-Server durchgeführt wurde. Es versteht sich jedoch, dass bei anderen Varianten der Erfindung auch eine andere Verteilung der Berechnungsaufgaben auf eine oder mehrere andere Instanzen vorgesehen sein kann. Insbesondere kann vorgesehen sein, dass die Berechnung der Restlebensdauer auch in einer Verarbeitungseinheit eines Fahrzeugs (insbesondere des Messfahrzeugs 102) selbst erfolgt, welche dann gegebenenfalls lediglich mit den entsprechenden Messdaten versorgt werden muss.

Schließlich versteht es sich, dass die Erfindung in Verbindung mit beliebigen Fahrzeugen, insbesondere beliebigen Schienenfahrzeugen für beliebige Anwendungen im Nahverkehr, Fernverkehr, insbesondere im Hochgeschwindigkeitsverkehr, verwenden lässt.

## Patentansprüche

1. Verfahren zum Bestimmen der Restlebensdauer einer Komponente eines auf wenigstens einem vorgegebenen Streckenabschnitt (103) eines Streckennetzes betriebenen Fahrzeugs, insbesondere eines Schienenfahrzeugs, bei dem
- die Restlebensdauer einer im Betrieb durch die Wechselwirkung zwischen dem Fahrzeug und dem Streckenabschnitt (103) mechanisch beanspruchten Fahrzeugkomponente (102.3), insbesondere einer Fahrwerkskomponente (102.3), des Fahrzeugs nach einem Nutzungsintervall des wenigstens einen Streckenabschnitts (103) ermittelt wird, wobei
- die Restlebensdauer der Fahrzeugkomponente (102.3) aus einem zu Beginn des Nutzungsintervalls für die Fahrzeugkomponente (102.3) vorgegebenen bisherigen Lebensdauerverlust und aus einem dem Nutzungsintervall zugeordneten aktuellen Lebensdauerverlust der Fahrzeugkomponente (102.3) ermittelt wird,
**dadurch gekennzeichnet, dass**
- der aktuelle Lebensdauerverlust anhand einer erfassten tatsächlichen Nutzung des wenigstens einen Streckenabschnitts (103) durch das Fahrzeug und einem auf die tatsächliche Nutzung des wenigstens einen Streckenabschnitts (103) bezogenen relativen Lebensdauerverlust ermittelt wird, wobei
- der relative Lebensdauerverlust für den wenigstens einen Streckenabschnitt (103) und zumindest den Typ des Fahrzeugs vorab ermittelt wurde.

2. Verfahren nach Anspruch 1, **dadurch gekennzeichnet, dass**
- der relative Lebensdauerverlust vom Zeitpunkt der Nutzung abhängig ist und
- bei der Ermittlung des Lebensdauerverlusts jeweils der Zeitpunkt einer Teilmenge der tatsächlichen Nutzungen des wenigstens einen Streckenabschnitts (103) durch das Fahrzeug berücksichtigt wird, insbesondere jeweils der Zeitpunkt einer tatsächlichen Nutzung des wenigstens einen Streckenabschnitts (103) durch das Fahrzeug berücksichtigt wird.

3. Verfahren nach Anspruch 1 oder 2, **dadurch gekennzeichnet, dass**
- der relative Lebensdauerverlust unter Verwendung von für die Beanspruchung der Fahrzeugkomponente (102.3) repräsentativen Messungen an einem Messfahrzeug (102), insbesondere dem Fahrzeug und/oder einem Vergleichsfahrzeug, während wenigstens eines Durchfahrens des wenigstens einen Streckenabschnitts (103) ermittelt wurde, wobei
- die für die Beanspruchung der Fahrzeugkomponente (102.3) repräsentativen Messungen insbesondere im normalen Transportbetrieb vorgenommen wurden
und/oder
- die für die Beanspruchung der Fahrzeugkomponente (102.3) repräsentativen Messungen insbesondere an einem als Messfahrzeug (102) verwendeten Vergleichsfahrzeug desselben Fahrzeugtyps vorgenommen wurden.

4. Verfahren nach Anspruch 3, **dadurch gekennzeichnet, dass**
- der relative Lebensdauerverlust für den wenigstens einen Streckenabschnitt (103) ein erster relativer Lebensdauerverlust für den wenigstens einen ersten Streckenabschnitt (103) ist,
- die unter Verwendung des ersten relativen Lebensdauerverlusts ermittelte Restlebensdauer eine erste Restlebensdauer für den weiteren Betrieb des Fahrzeugs auf dem wenigstens einen ersten Streckenabschnitt (103) ist und
- unter Verwendung eines zweiten relativen Lebensdauerverlusts für wenigstens einen zweiten Streckenabschnitt des Streckennetzes eine Ermittlung einer zweiten Restlebensdauer für den weiteren Betrieb des Fahrzeugs auf dem wenigstens einen zweiten Streckenabschnitt erstellt wird, wobei
- der zweite relative Lebensdauerverlust für den wenigstens einen zweiten Streckenabschnitt und zumindest den Typ des Fahrzeugs vorab ermittelt wurde.

5. Verfahren nach einem der vorhergehenden Ansprüche, **dadurch gekennzeichnet, dass**
- der relative Lebensdauerverlust vom Zeitpunkt der Nutzung abhängig ist und
- bei der Ermittlung der Restlebensdauer eine Prognose für die zukünftige Entwicklung des relativen Lebensdauerverlusts verwendet wird, wobei
- die Prognose für die zukünftige Entwicklung des relativen Lebensdauerverlusts insbesondere unter Verwendung einer Historie des relativen Lebensdauerverlusts ermittelt wird.

6. Verfahren nach einem der Ansprüche 3 bis 5, **dadurch gekennzeichnet, dass**
- das Messfahrzeug (102) eine Mehrzahl von Rädern (102.6) sowie über eine Federung (102.4; 102.7) darauf abgestützte Komponenten (102.1, 102.3) aufweist und
- die für die Beanspruchung der Fahrzeugkomponente (102.3) repräsentativen Messungen unter Verwendung wenigstens eines Beschleunigungssensors (104.2) und/oder wenigstens eines akustischen Sensors (104.3) und/oder wenigstens eines parallel zu der Federung (102.4) zwischen die Räder (102.6) und die darauf abgestützten Komponenten (102.1, 102.3) geschalteten Wegsensors (104.1) erfolgen, wobei
- das Messfahrzeug (102) insbesondere ein Fahrwerk (102.2) mit einer Mehrzahl von Rädern (102.6) und einem über eine Primärfederung (102.4) auf Radlagern der Räder (102.6) abgestützten Fahrwerksrahmen (102.3) aufweist und die für die Beanspruchung der Fahrzeugkomponente (102.3) repräsentativen Messungen unter Verwendung von wenigstens zwei, vorzugsweise wenigstens vier, parallel zu der Primärfederung (102.4) zwischen die Räder (102.6) und den Fahrwerksrahmen (102.3) geschalteten Wegsensoren (104.1) erfolgen.

7. System zum Bestimmen der Restlebensdauer einer Fahrzeugkomponente eines auf wenigstens einem vorgegebenen Streckenabschnitt eines Streckennetzes betriebenen Fahrzeugs, insbesondere eines Schienenfahrzeugs, mit einer Datenverarbeitungseinrichtung (106), die dazu ausgebildet ist,
- Restlebensdauerdaten zu ermitteln, welche für die Restlebensdauer einer im Betrieb durch die Wechselwirkung zwischen dem Fahrzeug und dem Streckenabschnitt (103) mechanisch beanspruchten Fahrzeugkomponente (102.3), insbesondere einer Fahrwerkskomponente (102.3), des Fahrzeugs nach einem Nutzungsintervall des wenigstens einen Streckenabschnitts (103) repräsentativ sind, wobei
- die Restlebensdauerdaten der Fahrzeugkomponente (102.3) aus anfänglichen Lebensdauerverlustdaten und aktuellen Lebensdauerverlustdaten ermittelt werden, die in der Datenverarbeitungseinrichtung (106) gespeichert sind, wobei
- die anfänglichen Lebensdauerverlustdaten für einen zu Beginn des Nutzungsintervalls für die Fahrzeugkomponente vorgegebenen bisherigen Lebensdauerverlust repräsentativ sind und die aktuellen Lebensdauerverlustdaten für einen dem Nutzungsintervall zugeordneten aktuellen Lebensdauerverlust der Fahrzeugkomponente (102.3) repräsentativ sind,
**dadurch gekennzeichnet, dass**
- die Datenverarbeitungseinrichtung (106) dazu ausgebildet ist, den aktuellen Lebensdauerverlust anhand von Nutzungsdaten und relativen Lebensdauerverlustdaten zu ermitteln, die jeweils in der Datenverarbeitungseinrichtung (106) gespeichert sind, wobei
- die Nutzungsdaten für eine zuvor erfasste tatsächliche Nutzung des wenigstens einen Streckenabschnitts (103) durch das Fahrzeug repräsentativ sind,
- die relativen Lebensdauerverlustdaten für einen auf die tatsächliche Nutzung des wenigstens einen Streckenabschnitts (103) bezogenen relativen Lebensdauerverlust repräsentativ sind und
- die relativen Lebensdauerverlustdaten für den wenigstens einen Streckenabschnitt (103) und zumindest den Typ des Fahrzeugs vorab ermittelt wurden.

8. System nach Anspruch 7, **dadurch gekennzeichnet, dass**
- die relativen Lebensdauerverlustdaten für mehrere Nutzungszeitpunkte jeweils einen mit einer Kennung für den Nutzungszeitpunkt verknüpften Lebensdauerverlustdatensatz umfassen und
- die Datenverarbeitungseinrichtung (106) dazu ausgebildet ist, bei der Ermittlung des Lebensdauerverlusts jeweils den Zeitpunkt einer Teilmenge der tatsächlichen Nutzungen des wenigstens einen Streckenabschnitts (103) durch das Fahrzeug zu berücksichtigen, insbesondere jeweils den Zeitpunkt einer tatsächlichen Nutzung des wenigstens einen Streckenabschnitts (103) durch das Fahrzeug zu berücksichtigen.
und/oder
- die relativen Lebensdauerverlustdaten für den wenigstens einen Streckenabschnitt erste relative Lebensdauerverlustdaten für den wenigstens einen ersten Streckenabschnitt (103) sind,
- die unter Verwendung der ersten relativen Lebensdauerverlustdaten ermittelten Restlebensdauerdaten erste Restlebensdauerdaten für den weiteren Betrieb des Fahrzeugs auf dem wenigstens einen ersten Streckenabschnitt (103) sind und
- die Datenverarbeitungseinrichtung (106) dazu ausgebildet ist, unter Verwendung gespeicherter zweiter relativer Lebensdauerverlustdaten für wenigstens einen zweiten Streckenabschnitt des Streckennetzes zweite Restlebensdauerdaten zu ermitteln, die für eine Restlebensdauer bei einem weiteren Betrieb des Fahrzeugs auf dem wenigstens einen zweiten Streckenabschnitt repräsentativ sind, wobei
- die zweiten relativen Lebensdauerverlustdaten für den wenigstens einen zweiten Streckenabschnitt und zumindest den Typ des Fahrzeugs vorab ermittelt wurden.

9. System nach einem der Ansprüche 7 oder 8, **dadurch gekennzeichnet, dass**
- die relativen Lebensdauerverlustdaten vom Zeitpunkt der Nutzung abhängig sind und
- die Datenverarbeitungseinrichtung (106) dazu ausgebildet ist, bei der Ermittlung der Restlebensdauerdaten eine Prognose für die zukünftige Entwicklung des relativen Lebensdauerverlusts zu verwenden, wobei
- die Datenverarbeitungseinrichtung (106) dazu ausgebildet ist, die Prognose für die zukünftige Entwicklung der relative Lebensdauerverlustdaten insbesondere unter Verwendung einer Historie der relativen Lebensdauerverlustdaten zu ermitteln.

10. System einem der Ansprüche 7 bis 9, **dadurch gekennzeichnet, dass**
- ein Messfahrzeug (102), insbesondere das Fahrzeug und/oder ein Vergleichsfahrzeug, mit einer mit der Datenverarbeitungseinrichtung (106) verbindbaren Messeinrichtung (104) vorgesehen ist, wobei
- die Messeinrichtung (104) zur Ermittlung des relativen Lebensdauerverlusts dazu ausgebildet ist, für die Beanspruchung der Fahrzeugkomponente (102.3) repräsentative Messungen an dem Messfahrzeug (102) während wenigstens eines Durchfahrens des wenigstens einen Streckenabschnitts (103) vorzunehmen, wobei
- die Messeinrichtung (104) insbesondere dazu ausgebildet ist, für die Beanspruchung der Fahrzeugkomponente (102.3) repräsentative Beanspruchungsdaten zu erfassen und an die Datenverarbeitungseinrichtung (106) weiterzugeben, und die Datenverarbeitungseinrichtung (106) dazu ausgebildet ist, die relativen Lebensdauerverlustdaten unter Verwendung der Beanspruchungsdaten zu ermitteln.
und/oder
- die Messeinrichtung (104) insbesondere dazu ausgebildet ist, die Beanspruchungsdaten im normalen Transportbetrieb des Messfahrzeugs(102) zu erfassen.
und/oder
- die Messeinrichtung (104) an einem als Messfahrzeug (102) verwendeten Vergleichsfahrzeug desselben Fahrzeugtyps angeordnet ist.
und/oder
- das Messfahrzeug (102) insbesondere eine Mehrzahl von Rädern (102.6) sowie über eine Federung (102.4, 102.7) darauf abgestützte Komponenten (102.1, 102.3) aufweist und die Messeinrichtung (104) zur Erfassung der Beanspruchungsdaten wenigstens einen Beschleunigungssensor (104.2) und/oder wenigstens einen akustischen Sensor (104.3) und/oder wenigstens einen parallel zu der Federung (102.4) zwischen die Räder (102.6) und die darauf abgestützten Komponenten (102.3) geschalteten Wegsensors (104.1) aufweist, wobeidas Messfahrzeug (102) insbesondere ein Fahrwerk (102.2) mit einer Mehrzahl von Rädern (102.6) und einem über eine Primärfederung (102.4) auf Radlagern der Räder (102.6) abgestützten Fahrwerksrahmen (102.3) aufweist.und die Messeinrichtung (104) wenigstens zwei, vorzugsweise wenigstens vier, parallel zu der Primärfederung (102.4) zwischen die Räder (102.6) und den Fahrwerksrahmen (102.3) geschaltete Wegsensoren (104.1) umfasst.

11. System nach Anspruch 10, **dadurch gekennzeichnet, dass**
- die Messeinrichtung (104) wenigstens einen Sensor (104.1, 104.2, 104.3), eine erste Steuereinrichtung (104.4) und eine zweite Steuereinrichtung (104.5) umfasst, wobei
- der wenigstens eine Sensor (104.1, 104.2, 104.3) zur Erfassung und Weitergabe der Beanspruchungsdaten an die erste Steuereinrichtung (104.4) ausgebildet ist,
- die erste Steuereinrichtung (104.4) zur Sammlung, Vorverarbeitung und Weitergabe der Beanspruchungsdaten an die zweite Steuereinrichtung (104.5) ausgebildet ist und
- die zweite Steuereinrichtung (104.5) zur Sammlung, Weiterverarbeitung und Weitergabe der Beanspruchungsdaten an die Datenverarbeitungseinrichtung (106) ausgebildet ist, wobei
- der wenigstens eine Sensor (104.1, 104.2, 104.3) und die erste Steuereinrichtung (104.4) insbesondere über einen ersten Datenbus und/oder die erste Steuereinrichtung (104.4) und die zweite Steuereinrichtung (104.5) über einen zweiten Datenbus (104.6, 104.7) verbunden sind,
und/oder
- die erste Steuereinrichtung (104.4) insbesondere räumlich nahe an der wenigstens einen Sensoreinrichtung (104.1, 104.2, 104.3) angeordnet ist.
und/oder
- die erste Steuereinrichtung (104.4) insbesondere dazu ausgebildet ist, die Beanspruchungsdaten des wenigsten einen Sensors (104.1, 104.2, 104.3) in ein Standardformat zu transformieren und derart formatiert weiterzugeben.
und/oder
- die Messeinrichtung (104) insbesondere eine Mehrzahl von Sensoren (104.1, 104.2, 104.3) umfasst, eine Mehrzahl von unterschiedlichen zu erfassenden Beanspruchungsdaten vorgebbar ist und die erste Steuereinrichtung (104.4) dazu ausgebildet ist, in Abhängigkeit von einer Vorgabe der zu erfassenden Beanspruchungsdaten unterschiedliche Sensoren (104.1, 104.2, 104.3) der Mehrzahl von Sensoren (104.1, 104.2, 104.3) zur Weitergabe von deren erfassten Beanspruchungsdaten anzusprechen.

12. System nach einem der Ansprüche 10 oder 11, **dadurch gekennzeichnet, dass**
- die Messeinrichtung (104) eine Positionserfassungseinrichtung (104.9) umfasst, die zur Erfassung der Position des Messfahrzeugs (102) zum Zeitpunkt der Erfassung der jeweiligen Beanspruchungsdaten und zum Verknüpfen der Beanspruchungsdaten mit einer Positionskennung ausgebildet ist
und/oder
- die Messeinrichtung (104) eine Zeiterfassungseinrichtung (104.8) umfasst, die zur Erfassung des Zeitpunkts der Erfassung der jeweiligen Beanspruchungsdaten und zum Verknüpfen der Beanspruchungsdaten mit einer Zeitkennung ausgebildet ist.
und/oder
- die Datenverarbeitungseinrichtung (106) insbesondere dazu ausgebildet ist, aus den Messdaten der Messeinrichtung (104) den Zustand des wenigstens einen Streckenabschnitts (103) repräsentierende Zustandsdaten zu ermitteln.

13. Messfahrzeug, insbesondere Schienenfahrzeug, mit einem System nach einem der Ansprüche 7 bis 12 mit
- einem Fahrwerk (102.2) mit wenigstens zwei Radeinheiten (102.5), die jeweils zwei Räder (102.6) umfassen,
- einer über eine Federung (102.4) auf den Radlagern der Räder (102.6) der beiden Radeinheiten abgestützten Fahrzeugeinheit, insbesondere einem Fahrwerksrahmen (102.3), und
- einer Messeinrichtung (104),
**dadurch gekennzeichnet, dass**
- die Messeinrichtung (104) zur Erfassung von Beanspruchungsdaten einer Fahrzeugkomponente (102.3), insbesondere einer Fahrwerkskomponente (102.3), des Messfahrzeugs (102) wenigstens vier Wegsensoren (104.1) aufweist, wobei
- jedem der Räder (102.6) der beiden Radeinheiten wenigstens ein Wegsensor (104.1) zugeordnet ist, der parallel zu der Federung (102.4) zwischen das jeweilige Rad (102.6) und die Fahrzeugeinheit (102.3) geschaltet ist.

14. Messfahrzeug nach Anspruch 13, **dadurch gekennzeichnet, dass**
- die Messeinrichtung (104) wenigstens einen Beschleunigungssensor (104.2) und/oder wenigstens einen akustischen Sensor (104.3) umfasst.
und/oder
- die Messeinrichtung (104) dazu ausgebildet ist, die Beanspruchungsdaten im normalen Transportbetrieb des Messfahrzeugs (102) zu erfassen.
und/oder
- die Messeinrichtung (104) eine erste Steuereinrichtung (104.4) und eine zweite Steuereinrichtung (104.5) umfasst, wobei der jeweilige Sensor (104.1, 104.2, 104.3) der Messeinrichtung (104) zur Erfassung und Weitergabe der Beanspruchungsdaten an die erste Steuereinrichtung (104.4) ausgebildet ist,die erste Steuereinrichtung (104.4) zur Sammlung, Vorverarbeitung und Weitergabe der Beanspruchungsdaten an die zweite Steuereinrichtung (104.5) ausgebildet ist und die zweite Steuereinrichtung (104.5) zur Sammlung, Weiterverarbeitung und Weitergabe der Beanspruchungsdaten an eine Datenverarbeitungseinrichtung (106) ausgebildet ist, wobei der jeweilige Sensor (104.1, 104.2, 104.3) der Messeinrichtung (104) und die erste Steuereinrichtung (104.4) insbesondere über einen ersten Datenbus und/oder die erste Steuereinrichtung (104.4) und die zweite Steuereinrichtung (104.5) über einen zweiten Datenbus (104.6, 104.7) verbunden sind, wobei die erste Steuereinrichtung (104.4) insbesondere räumlich nahe an der wenigstens einen Sensoreinrichtung (104.1, 104.2, 104.3) angeordnet ist.

15. Messfahrzeug nach einem der Ansprüche 13 oder 14, **dadurch gekennzeichnet, dass**
- die erste Steuereinrichtung (104.4) dazu ausgebildet ist, die Beanspruchungsdaten des wenigsten einen Sensors (104.1, 104.2, 104.3) in ein Standardformat zu transformieren und derart formatiert weiterzugeben, und/oder
- eine Mehrzahl von unterschiedlichen zu erfassenden Beanspruchungsdaten vorgebbar ist und die erste Steuereinrichtung (104.4) dazu ausgebildet ist, in Abhängigkeit von einer Vorgabe der zu erfassenden Beanspruchungsdaten unterschiedliche Sensoren (104.1, 104.2, 104.3) der Messeinrichtung (104) zur Weitergabe von deren erfassten Beanspruchungsdaten anzusprechen.
und/oder
- die Messeinrichtung (104) eine Positionserfassungseinrichtung (104.9) umfasst, die zur Erfassung der Position des Messfahrzeugs (102) zum Zeitpunkt der Erfassung der jeweiligen Beanspruchungsdaten und zum Verknüpfen der Beanspruchungsdaten mit einer Positionskennung ausgebildet ist
und/oder
- die Messeinrichtung (104) eine Zeiterfassungseinrichtung (104.8) umfasst, die zur Erfassung des Zeitpunkts der Erfassung der jeweiligen Beanspruchungsdaten und zum Verknüpfen der Beanspruchungsdaten mit einer Zeitkennung ausgebildet ist.

## Claims

1. Method for determining the remaining service life of a component of a vehicle, in particular a railway vehicle, operated on at least one prescribed route section (103) of a route network, wherein
- the remaining service life of a vehicle component (102.3), in particular of a chassis component (102.3), of the vehicle, which is mechanically stressed in operation by the interaction between the vehicle and the route section (103), is determined according to a usage interval of the at least one route section (103), wherein
- the remaining service life of the vehicle component (102.3) is determined from a previous loss of service life given at the beginning of the usage interval for the vehicle component (102.3) and from a current loss of service life of the vehicle component (102.3) associated with the usage interval,
**characterized in that**
- the current loss of service life is determined by means of a detected actual usage of the at least one route section (103) by the vehicle and a relative loss of service life related to the actual usage of the at least one route section (103), wherein
- the relative loss of service life has been determined in advance for the at least one route section (103) and at least for the type of the vehicle.

2. Method according to Claim 1, **characterized in that**
- the relative loss of service life is dependent on the point in time of the usage and
- when determining the loss of service life, the respective point in time of a subset of the actual usages of the at least one route section (103) by the vehicle is considered, in particular the respective point in time of an actual usage of the at least one route section (103) by the vehicle is considered.

3. Method according to Claim 1 or 2, **characterized in that**
- the relative loss of service life was determined using measurements representative for the stress of the vehicle component (102.3) taken on a measurement vehicle (102), in particular the vehicle and/or a comparison vehicle, during at least one pass of the at least one route section (103), wherein
- the measurements representative for the stress of the vehicle component (102.3), in particular, have been taken in normal transport operation,
and/or
- the measurements representative for the stress of the vehicle component (102.3), in particular, have been on a comparison vehicle of the same vehicle type, used as a measurement vehicle (102).

4. Method according to Claim 3, **characterized in that**
- the relative loss of service life for the at least one route section (103) is a first relative loss of service life for the at least one first route section (103),
- the remaining service life determined using the first relative loss of service life is a first remaining service life for the further operation of the vehicle on the at least one first route section (103) and
- a determination of a second remaining service life for the further operation of the vehicle on at least one second route section is determined using a second relative loss of service life for the at least one second route section of the route network, wherein
- the second relative loss of service life has been determined in advance for the at least one second route section and at least the type of vehicle.

5. Method according to one of the preceding claims, **characterized in that**
- the relative loss of service life is dependent on the point in time of the usage and
- when determining the remaining service life, a prediction for the future development of the relative loss of service life is used, wherein
- the prediction for the future development of the relative loss of service life, in particular, is determined using a history of the relative loss of service life.

6. Method according to one of Claims 3 to 5, **characterized in that**
- the measurement vehicle (102) has a plurality of wheels (102.6) as well as components (102.1, 102.3) supported thereon via a suspension (102.4; 102.7) and
- the measurements representative for the stress of the vehicle component (102.3) occur using at least one acceleration sensor (104.2) and/or at least one acoustic sensor (104.3) and/or at least one path sensor (104.1) installed, in parallel to the suspension (102.4), between the wheels (102.6) and the components (102.1, 102.3) supported thereon, wherein
- the measurement vehicle (102), in particular, has a chassis (102.2) having a plurality of wheels (102.6) and a chassis frame (102.3) supported via a primary suspension (102.4) on the wheel bearings of the wheels (102.6), and the measurements representative for the stress of the vehicle component (102.3) occur using at least two, preferably at least four, path sensors (104.1) installed, in parallel to the primary suspension (102.4), between the wheels (102.6) and the chassis frame (102.3).

7. System for determining the remaining service life of a vehicle component of a vehicle, in particular a railway vehicle, operated on at least one predefined route section of a route network, said vehicle having a data processing device (106) configured to
- determine remaining service life data representative for the remaining service life of a vehicle component (102.3), in particular a chassis component (102.3), of the vehicle after a usage interval of at least one route section (103), said component being mechanically stressed in operation by the interaction between the vehicle and the route section (103), wherein
- the remaining service life data of the vehicle component (102.3) is determined from initial loss of service life data and current loss of service life data, which is stored in the data processing device (106), wherein
- the initial loss of service life data is representative for a previous loss of service life which is given for the vehicle component at the beginning of the usage interval, and the current loss of service life data is representative for a current loss of service life of the vehicle component (102.3) allocated to the usage interval,
**characterized in that**
- the data processing device (106) is configured to determine the current loss of service life by means of usage data and relative loss of service life data which is stored in the data processing device (106), wherein
- the usage data is representative for a previously detected actual usage of the at least one route section (103) by the vehicle,
- the relative loss of service life data is representative for a relative loss of service life related to the actual usage of the at least one route section (103) and
- the relative loss of service life data was determined in advance for the at least one route section (103) and for at least the type of vehicle.

8. System according to Claim 7, **characterized in that**
- the relative loss of service life data, for several usage points in time, comprises a respective loss of service life data set linked to an identification of the usage point in time and
- the data processing device (106) is configured to consider, when determining the loss of service life, the respective point in time of a subset of the actual usages of the at least one route section (103) by the vehicle, in particular to consider the respective point in time of an actual usage of the at least one route section (103) by the vehicle,
and/or
- the relative loss of service life data for the at least one route section is first relative loss of service life data for the at least one first route section (103),
- the remaining service life data determined using the first relative loss of service life data is first remaining service life data for the further operation of the vehicle on the at least one first route section (103) and
- the data processing device (106) is configured to determine second remaining service life data, which is representative for a remaining service life during a further operation of the vehicle on the at least one second route section, using stored second relative loss of service life data for at least one second route section of the route network, wherein
- the second relative loss of service life data has been determined in advance for the at least one second route section and for at least the type of the vehicle.

9. System according to one of Claims 7 or 8, **characterized in that**
- the relative loss of service life data is dependent on the point in time of the usage and
- the data processing device (106) is configured to use a prediction for the future development of the relative loss of service life when determining the remaining service life data, wherein
- the data processing device (106), in particular, is configured to determine the prediction for the future development of the relative loss of service life data using a history of the relative loss of service life data.

10. System according to one of Claims 7 to 9, **characterized in that**
- a measurement vehicle (102), in particular the vehicle and/or a comparison vehicle, is provided with a measurement device (104) that is able to be connected to the data processing device (106) wherein
- the measurement device (104), for determining the relative loss of service life, is configured to carry out measurements representative for the stress of the vehicle component (102.3) on the measurement vehicle (102) during at least one pass of the at least one route section (103), wherein
- the measurement device (104), in particular, is configured to detect stress data representative for the stress of the vehicle component (102.3) and to transmit it to the data processing device (106), and the data processing device (106) is configured to determine the relative loss of service life data using the stress data,
and/or
- the measurement device (104) is configured in particular to detect the stress data in normal transport operation of the measurement vehicle (102),
and/or
- the measurement device (104) is arranged on a comparison vehicle of the same vehicle type used as a measurement vehicle (102),
and/or
- the measurement vehicle (102), in particular, has a plurality of wheels (102.6) as well as components (102.1, 102.3) supported thereon via a suspension (102.4, 102.7) and the measurement device (104), for detecting the stress data, has at least one acceleration sensor (104.2) and/or at least one acoustic sensor (104.3) and/or at least one path sensor (104.1) installed, in parallel to the suspension (102.4), between the wheels (102.6) and the components (102.3) supported thereon, wherein the measurement vehicle (102), in particular, has a chassis (102.2) having a plurality of wheels (102.6) and a chassis frame (102.3) supported via a primary suspension (102.4) on wheel bearings of the wheels (102.6), and the measurement device (104) comprises at least two, preferably at least four, path sensors (104.1) installed, in parallel to the primary suspension (102.4), between the wheels (102.6) and the chassis frame (102.3).

11. System according to Claim 10, **characterized in that**
- the measurement device (104) comprises at least one sensor (104.1, 104.2, 104.3), a first control device (104.4) and a second control device (104.5), wherein
- the at least one sensor (104.1, 104.2, 104.3) is configured for detecting and transmitting the stress data to the first control device (104.4),
- the first control device (104.4) is configured for collecting, pre-processing and transmitting the stress data to the second control device (104.5) and
- the second control device (104.5) is configured for collecting, further processing and transmitting the stress data to the data processing device (106), wherein,
- in particular, the at least one sensor (104.1, 104.2, 104.3) and the first control device (104.4) are connected via a first data bus and/or the first control device (104.4) and the second control device (104.5) are connected via a second data bus (104.6, 104.7),
and/or
- the first control device (104.4), in particular, is arranged spatially close to the at least one sensor device (104.1, 104.2, 104.3),
and/or
- the first control device (104.4), in particular, is configured to transform the stress data of the at least one sensor (104.1, 104.2, 104.3) into a standard format and to transmit it thus formatted,
and/or
- the measurement device (104), in particular, comprises a plurality of sensors (104.1, 104.2, 104.3), a plurality of different stress data to be detected being specifiable and the first control device (140.4) is configured to trigger, as a function of a specification of the stress data to be detected, different sensors (104.1, 104.2, 104.3) of the plurality of sensors (104.1, 104.2, 104.3) for the transmission of the detected stress data thereof,.

12. System according to one of Claims 10 or 11, **characterized in that**
- the measurement device (104) comprises a position detection device (104.9), which is configured for detecting the position of the measurement vehicle (102) at the point in time of the detection of the respective stress data and for the linking of the stress data to a position identification
and/or
- the measurement device (104) comprises a time detection device (104.8) which is configured for detecting the point in time of the detection of the respective stress data and for linking the stress data to a time identification,
and/or
- the data processing device (106), in particular, is configured to determine state data representing the state of the at least one route section (103) from the measurement data of the measurement device (104).

13. Measurement vehicle, in particular railway vehicle, having a system according to one of Claims 7 to 12 having
- a chassis (102.2) having at least two wheel units (102.5), which comprise two wheels (102.6) respectively,
- a vehicle unit, in particular a chassis frame (102.3), supported via a suspension (102.4) on the wheel bearings of the wheels (102.6) of the two wheel units, and
- a measurement device (104),
**characterized in that**
- the measurement device (104), for detecting stress data of a vehicle component (102.3) of the measurement vehicle (102), in particular a chassis component (102.3), has at least four path sensors (104.1), wherein
- at least one path sensor (104.1), which is connected in parallel to the suspension (102.4) between the respective wheel (102.6) and the vehicle unit (102.3), is allocated to each of the wheels (102.6) of the two wheel units.

14. Measurement vehicle according to Claim 13, **characterized in that**
- the measurement device (104) comprises at least one acceleration sensor (104.2) and/or at least one acoustic sensor (104.3),
and/or
- the measurement device (104) is configured to detect the stress data in normal transport operation of the measurement vehicle (102),
and/or
- the measurement device (104) comprises a first control device (104.4) and a second control device (104.5), wherein the respective sensor (104.1, 104.2, 104.3) of the measurement device (104) is configured for detecting and transmitting the stress data to the first control device (104.4), the first control device (104.4) is configured for collecting, pre-processing and transmitting the stress data to the second control device (104.5) and the second control device (104.5) is configured for collecting, further processing and transmitting the stress data to a data processing device (106), wherein, in particular, the respective sensor (104.1, 104.2, 104.3) of the measurement device (104) and the first control device (104.4) are connected via a first data bus and/or the first control device (104.4) and the second control device (104.5) are connected via a second data bus (104.6, 104.7), wherein the first control device (104.4), in particular, is arranged spatially close to the at least one sensor device (104.1, 104.2, 104.3).

15. Measurement vehicle according to one of Claims 13 or 14, **characterized in that**
- the first control device (104.4) is configured to transform the stress data of the at least one sensor (104.1, 104.2, 104.3) into a standard format and to transmit it thus formatted,
and/or
- a plurality of different stress data to be detected is able to be specified and the first control device (104.4) is configured to trigger different sensors (104.1, 104.2, 104.3) of the measurement device (104) for the transmission of the detected stress data thereof depending on a specification of the stress data to be detected,
and/or
- the measurement device (104) comprises a position detection device (104.9), which is configured for detecting the position of the measurement vehicle (102) at the point in time of the detection of the respective stress data and for linking the stress data to a position identification,
and/or
- the measurement device (104) comprises a time detection device (104.8) which is configured for detecting the point in time of the detection of the respective stress data and for linking the stress data to a time identification.

## Revendications

1. Procédé pour déterminer la durée de vie résiduelle d'un composant d'un véhicule, en particulier un véhicule sur rails, opéré sur au moins un tronçon de parcours prédéfini (103) d'un réseau routier, dans lequel
- la durée de vie résiduelle d'un composant du véhicule (102.3), en particulier d'un composant de châssis, du véhicule mécaniquement sollicité, en opération, par l'interaction entre le véhicule et le tronçon de parcours (103) est déterminée après un intervalle d'utilisation de l'au moins un tronçon de parcours (103),
- la durée de vie résiduelle du composant de véhicule (102.3) étant déterminée à partir d'une perte de durée de vie existante jusqu'à présent pour le composant de véhicule (102.3) donnée au début de l'intervalle d'utilisation et d'une perte de durée de vie actuelle du composant de véhicule (102.3) associée à l'intervalle d'utilisation,
**caractérisé en ce que**
- la perte de durée de vie actuelle est déterminée à l'aide d'une utilisation effective mesurée de l'au moins un tronçon de parcours (103) par le véhicule et d'une perte de durée de vie relative en rapport avec l'utilisation effective de l'au moins un tronçon de parcours (103), où
- la perte de durée de vie relative a été précédemment déterminée pour l'au moins un tronçon de parcours (103) et pour au moins le type du véhicule.

2. Procédé selon la revendication 1, **caractérisé en ce que**
- la perte de durée vie relative dépend du moment de l'utilisation et
- lors de la détermination de la perte de durée de vie le moment d'utilisation respectif d'une quantité partielle des utilisations effectives de l'au moins un tronçon de parcours (103) par le véhicule est pris en compte, en particulier le moment d'utilisation effective respectif de l'au moins un tronçon de parcours (103) par le véhicule.

3. Procédé selon la revendication 1 ou 2, **caractérisé en ce que**
- la perte de durée de vie relative a été déterminée en utilisant des mesures représentatives pour la sollicitation du composant de véhicule (102.3) prises sur un véhicule de mesure (102), en particulier le véhicule et/ou un véhicule de comparaison, pendant au moins un passage sur l'au moins un tronçon de parcours (103), où
- les mesures représentatives pour la sollicitation du composant de véhicule (102.3) ont été prises, en particulier, en mode de transport normal, et/ou
- les mesures représentatives pour la sollicitation du composant de véhicule (102.3) ont été prises, en particulier, sur un véhicule de comparaison du même type de véhicule utilisé en tant que véhicule de mesure (102).

4. Procédé selon la revendication 3, **caractérisé en ce que**
- la perte de durée de vie relative pour le au moins un tronçon de parcours (103) est une première perte de vie relative pour l'au moins un premier tronçon de parcours (103),
- la durée de vie résiduelle déterminée en utilisation la première perte de durée de vie relative est une première durée de vie résiduelle pour le fonctionnement ultérieur du véhicule sur l'au moins un premier tronçon de parcours (103), et
- une deuxième durée de vie résiduelle est déterminée pour au moins un deuxième tronçon de parcours du réseau routier en utilisant une deuxième perte de durée de vie relative pour le fonctionnement ultérieur du véhicule sur l'au moins un deuxième tronçon, où
- la deuxième perte de durée de vie relative a été déterminée préalablement pour l'au moins un deuxième tronçon de parcours et pour au moins le type de véhicule.

5. Procédé selon une des revendications précédentes, **caractérisé en ce que**,
- la perte de durée de vie relative dépend du moment de l'utilisation et
- une prévision du développement futur de la perte de durée de vie relative est utilisée lors de la détermination de la durée de vie résiduelle, où
- la prévision pour le développement futur de la perte de durée de vie relative, en particulier, est déterminée en utilisant une histoire de la perte de durée de vie relative.

6. Procédé selon une des revendications de 3 à 5, **caractérisé en ce que**
- le véhicule de mesure (102) présente une pluralité de roues (102.6) ainsi que des composants (102.1, 102.3) prenant appui sur les derniers à travers une suspension (102.4; 102.7) et
- les mesures représentatives pour la sollicitation du composant de véhicule (102.3) ont lieu en utilisant au moins un capteur d'accélération (104.2) et/ou au moins un capteur acoustique (104.3) et/ou au moins un capteur de course (104.1) branché, en parallèle à la suspension (102.4), entre les roues (102.6) et les composants y prenant appui (102.1, 102.3),où
- le véhicule de mesure (102), en particulier, présente un châssis (102.2) avec une pluralité de roues (102.6) et un cadre de châssis (102.3) prenant appui à travers une suspension primaire (102.4) sur des roulements de roue des roues (102.6) et les mesures représentatives pour la sollicitation du composant de véhicule (102.3) ont lieu en utilisant au moins deux, de préférence quatre capteurs de course (104.1) branchés, en parallèle à la suspension primaire (102.4), entre les roues (102.6) et le cadre de châssis (102.3).

7. Système permettant de déterminer la durée de vie résiduelle d'un composant de véhicule d'un véhicule, en particulier d'un véhicule sur rails, opéré sur au moins un tronçon de parcours prédéfini d'un réseau routier comportant un dispositif de traitement de données (106), le dernier étant configuré afin de
- déterminer des données de durée de vie résiduelle, lesquelles sont représentatives pour la durée de vie résiduelle d'un composant de véhicule (102.3) du véhicule, en particulier d'un composant de châssis (102.3), après un intervalle d'utilisation de l'au moins un tronçon de parcours (103), ce composant de véhicule (102.3) étant mécaniquement sollicité, en opération, par l'interaction entre le véhicule et le tronçon de parcours (103), où
- les données de durée de vie résiduelle du composant de véhicule (102.3) sont déterminées à partir de données de perte de durée de vie initiales et de données de perte de durée de vie actuelles qui sont sauvegardées dans le dispositif de traitement de données (106), où
- les données de perte de durée de vie initiales sont représentatives pour une perte de durée de vie existante jusqu'à présent, donnée pour le composant de véhicule au début de l'intervalle d'utilisation, et les données de perte de durée de vie actuelles sont représentatives pour une perte de durée de vie actuelle associée à l'intervalle d'utilisation du composant de véhicule (102.3),
**caractérisé en ce que**
- le dispositif de traitement de données (106) est configuré de sorte à calculer la perte de durée de vie actuelle à l'aide de données d'utilisation et de données de perte de durée de vie relative qui sont respectivement sauvegardées dans le dispositif de traitement de données (106), où
- les données d'utilisation sont représentatives d'une utilisation effective précédemment saisie de l'au moins un tronçon de parcours (103) par le véhicule,
- les données de perte de durée de vie relative sont représentatives d'une perte de durée de vie relative associée à l'utilisation effective de l'au moins un tronçon de parcours (103) et
- les données de perte de durée de vie relative ont été précédemment déterminées pour l'au moins un tronçon de parcours (103) et pour au moins le type de véhicule.

8. Système selon la revendication 7, **caractérisé en ce que**
- les données de perte de durée de vie relative, pour plusieurs moments d'utilisation, comprennent un set de données respectif de perte de durée de vie associé à un identifiant du moment d'utilisation et
- le dispositif de traitement de données (106) est configuré de sorte à prendre en compte, lors de la détermination de la perte de durée de vie, le moment d'utilisation respectif d'une quantité partielle des utilisations effectives de l'au moins un tronçon de parcours (103) par le véhicule, en particulier à prendre en compte le moment d'utilisation effective respectif de l'au moins un tronçon de parcours (103) par le véhicule,
et/ou
- les données de perte de durée de vie relative pour l'au moins un tronçon de parcours sont des premières données de perte de durée de vie relative pour l'au moins un premier tronçon de parcours (103),
- les données de durée de vie résiduelle déterminées en utilisant les premières données de perte de durée de vie relative sont les premières données de durée de vie résiduelle pour le fonctionnement ultérieur du véhicule sur l'au moins un premier tronçon de parcours (103), et
- le dispositif de traitement de données (106) est configuré de sorte à déterminer des deuxièmes données de durée de vie résiduelle en utilisant des deuxièmes données de perte de durée de vie relative sauvegardées pour au moins un deuxième tronçon de parcours du réseau routier, ces deuxièmes données de durée de vie résiduelle étant représentatives pour une durée de vie résiduelle lors d'un fonctionnement ultérieur du véhicule sur l'au moins un deuxième tronçon de parcours, où
- les deuxièmes données de perte de durée de vie relative ont été précédemment déterminées pour au moins un deuxième tronçon de parcours et pour au moins le type du véhicule.

9. Système selon une des revendications de 7 à 8, **caractérisé en ce que**
- les données de perte de durée de vie relative dépendent du moment de l'utilisation et
- le dispositif de traitement de données (106) est configuré de sorte à utiliser, lors de la détermination des données de durée de vie résiduelle, une prévision du développement futur de la perte de durée de vie relative, où
- le dispositif de traitement de données (106), en particulier, est configuré de sorte à calculer la prévision pour le développement futur des données de perte de durée de vie relative en utilisant une histoire des données de perte de durée de vie relative.

10. Système selon une des revendications de 7 à 9, **caractérisé en ce que**
- un véhicule de mesure (102), en particulier le véhicule et /ou un véhicule de comparaison, est muni d'un dispositif mesure (104) susceptible d'être relié au dispositif de traitement de données (106), où
- le dispositif de mesure (104), pour déterminer la perte de durée de vie relative, est configuré de sorte à prendre des mesures représentatives pour la sollicitation du composant de véhicule (102.3) au niveau du véhicule de mesure (102) pendant au moins un passage de l'au moins un tronçon de parcours (103), où
- le dispositif de mesure (104), en particulier, est configuré de sorte à saisir des données de sollicitation représentatives pour la sollicitation du composant de véhicule (102.3) et de les transmettre au dispositif de traitement de données (106), et le dispositif de traitement de données (106) est configuré de sorte à déterminer les données de perte de durée de vie relative en utilisant les données de sollicitation,
et/ou
- le dispositif de mesure (104) est configuré en particulier de sorte à saisir les données de sollicitation en un mode de transport normal du véhicule de mesure (102),
et/ou
- le dispositif de mesure (104) est agencé sur un véhicule de comparaison du même type de véhicule utilisé en tant que véhicule de mesure (102),
et/ou
- le véhicule de mesure (102) présente une pluralité de roues (102.6) et des composants (102.1, 102.3) prenant appui sur les derniers à travers une suspension (102.4) et le dispositif de mesure (104) présente, pour la saisie des données de sollicitation, au moins un capteur d'accélération (104.2) et/ou au moins un capteur acoustique (104.3) et/ou au moins un capteur de course (104.) branché, en parallèle à la suspension (102.4), entre les roues (102.6) et les composants (102.3) y prenant appui, où le véhicule de mesure (102), en particulier, présente un châssis (102.2) avec une pluralité de roues (102.6) et un cadre de châssis (102.3) prenant appui sur des roulements de roue des roues (102.6) à travers la suspension primaire (102.4) et le dispositif de mesure (104) comprend au moins deux, de préférence au moins quatre capteurs de course (104.1) branchés, en parallèle à la suspension primaire (102.4), entre les roues (102.6) et le cadre de châssis (102.3).

11. Système selon la revendication 10, **caractérisé en ce que**
- le dispositif de mesure (104) comprend au moins un capteur (104.1, 104.2, 104.3), un premier dispositif de commande (104.4) et un deuxième dispositif de commande (104.5), où
- l'au moins un capteur (104.1, 104.2, 104.3) est configuré de sorte à saisir et transmettre des données de sollicitation au premier dispositif de commande (104.4),
- le premier dispositif de commande (104.4) est configuré pour recueillir, prétraiter et transmettre les données de sollicitation au deuxième dispositif de commande (104.5) et
- le deuxième dispositif de commande (104.5) est configuré pour recueillir, traiter ultérieurement et transmettre les données de sollicitation au dispositif de traitement de données (106), où,
- en particulier, le au moins un capteur (104.1, 104.2, 104.3) et le premier dispositif de commande (104.4) sont reliés à l'aide d'un premier bus de données et/ou le premier dispositif de commande (104.4) et le deuxième dispositif de commande (104.5) sont reliés à l'aide d'un deuxième bus de données (104.6, 104.7),
et/ou
- le premier dispositif de commande (104.4), en particulier, est agencé à proximité de l'au moins un dispositif détecteur (104.1, 104.2, 104.3),
et/ou
- le premier dispositif de commande (104.4), en particulier, est configuré de sorte à transformer les données de sollicitation de l'au moins un capteur (104.1, 104.2, 104.3) en un format standard et de les transmettre ainsi formatées,
et/ou
- le dispositif de mesure (104), en particulier, comprend une pluralité de capteurs (104.1, 104.2, 104.3), une pluralité de données de sollicitation différentes à saisir est donnée et le premier dispositif de commande (104.4) est configuré de sorte à interpeller, en fonction d'une directive relative aux données de sollicitation à saisir, des capteurs différents (104.1, 104.2, 104.3) parmi la majorité de capteurs (104.1, 104.2, 104.3),pour la transmission de leurs données de sollicitation saisies.

12. Système selon une des revendications 10 ou 11, **caractérisé en ce que**
- le dispositif de mesure (104) comprend un dispositif de saisie de position (104.9) qui est configuré de sorte à saisir la position du véhicule de mesure (102) au moment de la saisie des données de sollicitation respectives et qui est configuré pour associer les données de sollicitation à un identifiant de position,
et/ou
- le dispositif de mesure (104) comprend un dispositif de saisie de temps (104.8), qui est configuré de sorte à saisir le moment du moment de la saisie des données de sollicitation respectives et de sorte à associer les données de sollicitation à un identifiant temporel.
et/ou
- le dispositif de traitement de données (106), en particulier, est configuré de sorte à déterminer les données d'état représentatives de l'état de l'au moins un tronçon de parcours (103) à partir des données de mesure du dispositif de mesure (104).

13. Véhicule de mesure, en particulier un véhicule sur rails, avec un système selon une des revendications de 7 à 12 avec
- un châssis (102.2) avec au moins deux unités de roues (102.5) qui comprennent respectivement deux roues (102.6),
- une unité de véhicule, en particulier un cadre de châssis (102.3), prenant appui sur les roulements de roue des roues (102.6) des deux unités de roue à travers une suspension (102.4), et
- un dispositif de mesure (104),
**caractérisé en ce que**
- le dispositif de mesure (104) présente au moins quatre capteurs de course (104.1) pour saisir des données de sollicitation d'un composant de véhicule (102.3), en particulier un composant de châssis (102.3), du véhicule de mesure (102), où
- au moins un capteur de course (104.1) est associé à chacune des roues (102.6) des deux unités de roue, ce capteur étant branché, en parallèle à la suspension (102.4), entre la roue (102.6) respective et l'unité de véhicule (102.3).

14. Véhicule de mesure selon la revendication 13, **caractérisé en ce que**
- le dispositif de mesure (104) comprend au moins un capteur d'accélération (104.2) et/ou au moins un capteur acoustique (104.3),
et/ou
- le dispositif de mesure (104) est configuré de sorte à saisir les données de sollicitation lors d'un mode de transport normal du véhicule de mesure (102),
et/ou
- le dispositif de mesure (104) comprend un premier dispositif de commande (104.4) et un deuxième dispositif de commande (104.5), où le capteur (104.1, 104.2, 104.3) respectif du dispositif de mesure (104) est configuré pour saisir et transmettre les données de sollicitation au premier dispositif de commande (104.4), le premier dispositif de commande (104.4) est configuré pour collecter, prétraiter et transmettre les données de sollicitation au deuxième dispositif de commande (104.5) et le deuxième dispositif de commande (104.5) est configuré pour collecter, traiter ultérieurement et transmettre les données de sollicitation à un dispositif de traitement de données (106), où, en particulier, le capteur respectif (104.1, 104.2, 104.3) du dispositif de mesure (104) et le premier dispositif de commande (104.4) sont reliés par un premier bus de données et/ou le premier dispositif de commande (104.4) et le deuxième dispositif de commande (104.5) sont reliés par un deuxième bus de données (104.6, 104.7), où le premier dispositif de commande (104.4), en particulier, est agencé à proximité de l'au moins un premier dispositif détecteur (104.1, 104.2, 104.3).

15. Véhicule de mesure selon une des revendications 13 ou 14, **caractérisé en ce que**
- la première unité de commande (104.4) est configurée de sorte à transformer les données de sollicitation de l'au moins un capteur (104.1, 104.2, 104.3) en un format standard et de les retransmettre ainsi formatées, et/ou
- une pluralité de données de sollicitation différentes à saisir pouvant être spécifiée et la première unité de commande (104.4) est configurée de sorte à interpeller plusieurs capteurs (104.1, 104.2, 104.3) du dispositif de mesure (104) en fonction d'une spécification des données de sollicitation à saisir afin de transmettre leurs données de sollicitation ainsi saisies,
et/ou
- le dispositif de mesure (104) comprend un dispositif de saisie de position (104.9) qui est configuré pour saisir la position du véhicule de mesure (102) au moment de la saisie des données de sollicitation respectives et pour associer les données de sollicitation à un identifiant de position,
et/ou
- le dispositif de mesure (104) comprend un dispositif de saisie de temps (104.9) qui est configuré pour saisir le moment de la saisie des données de sollicitation respectives et pour associer les données de sollicitation à un identifiant temporel.
